# EUROPEAN PATENT APPLICATION

(11) **EP 4 700 332 A1**
(43) Date of publication of application: **25.02.2026**
(21) Application number: 24847846.3
(22) Date of filing: 20.06.2024
(51) Int. Cl.: G01C 21/20

(54) **DATA PROCESSING METHOD AND APPARATUS, AND DEVICE AND READABLE STORAGE MEDIUM**

(30) Priority: 01.08.2023 CN 202310964843
(71) Applicant: Tencent Technology (Shenzhen) Company Limited, Shenzhen, Guangdong 518057 (CN)
(72) Inventor: SUN, Zhongyang, Shenzhen, Guangdong 518057 (CN)
(74) Representative: EP&C
(86) International application number: PCT/CN2024/100336
(87) International publication number: WO 2025/025883

(57) **Abstract**

A data processing method and apparatus, and a device and a readable storage medium. The method comprises: in response to a navigation request of a target object for a target article, collecting first environmental change information of the target object during a first movement process by means of an augmented reality device worn by the target object, wherein the first movement process refers to the process of moving from a starting position point to a parking position point of the target article (S101); and when the first environmental change information, which is collected by the augmented reality device, includes a target key position point, outputting movement guidance prompt information associated with the target key position point, wherein the movement guidance prompt information is used for guiding the target object to reach the parking position point, the target key position point refers to a position point which includes target identification degree information and is collected by means of the augmented reality device during the process of moving from the parking position point to a destination position point, and the starting position point refers to any position point where the target object is located during the process of the target object moving from the destination position point to the parking position point (S102). The method can improve the efficiency of searching for the target article.

## Description

### RELATED APPLICATION

This application claims priority to Chinese Patent Application No. 2023109648432, filed with the China National Intellectual Property Administration on August 1, 2023 and entitled "DATA PROCESSING METHOD AND APPARATUS, DEVICE, AND READABLE STORAGE MEDIUM", which is incorporated by reference in its entirety.

### FIELD OF THE TECHNOLOGY

This application relates to the technical field of computers, and in particular, to a data processing method and apparatus, a device, and a readable storage medium.

### BACKGROUND OF THE DISCLOSURE

With the rapid development of computer technologies, a large number of navigation applications have been launched, and navigation functions provided by these navigation applications satisfy people's different requirements. In real life, when an object expects to reach a position point where an item is located (for example, a parking position point of a car), a navigation application may be adopted to obtain route guidance of the position point.

In the related art, a premise of acquiring route guidance of a position point using a navigation application is that the position point has a global navigation satellite system (GNSS) signal. If the position point does not have the GNSS signal, the navigation application cannot recognize coordinates of the position point, resulting in that corresponding route guidance cannot be provided. In this case, the object needs to search for a path by itself to reach a position point where the item is parked and find the item without the route guidance. It can be learned that for a position point having no GNSS signal, the object needs to search for a path to reach the position point by itself, which consumes very high time costs and is not efficient.

### SUMMARY

All embodiments of this disclosure provide a data processing method and apparatus, a device, and a readable storage medium, which may improve the efficiency of searching for a target item.

According to an aspect of the embodiments of this disclosure, a data processing method is provided, which is executable by a computer device, and includes:
receiving, in response to a navigation request of an object for a first position point, first environment information of the object that is acquired by an augmented reality (AR), device worn by the object during a first moving process performed by the object moving from a current position point to a first position point; and
in response to the first environment information including a first key position point, outputting movement guidance prompt information associated with the first key position point and configured to guide the object to move from the current position point to the first position point, the first key position point being acquired during a second moving process performed by the object moving from the first position point to a second position point and containing first identification information, and the current position point comprises any position point at which the object is located in a process of the object moving from the second position point to the first position point.

According to an aspect of the embodiments of this disclosure, a data processing apparatus is provided, which is applied to a computer device, and includes:
a response module configured to receive, in response to a navigation request of an object for a first position point, first environment information of the object that is acquired by an augmented reality, AR, device worn by the object during a first moving process performed by the object moving from a current position point to a first position point; and
a prompt output module configured to, in response to the first environment information including a first key position point, output movement guidance prompt information associated with the first key position point and configured to guide the object to move from the current position point to the first position point, the first key position point being acquired during a second moving process performed by the object moving from the first position point to a second position point and containing first identification information, and the current position point comprises any position point at which the object is located in a process of the object moving from the second position point to the first position point.

In all embodiments, the movement guidance prompt information comprises a first recording video associated with the first key position point, and the first recording video is acquired by the AR device during the second moving process and is used for recording the first identification information and an ambient environment containing the first identification information.

An implementation in which the prompt output module outputs the movement guidance prompt information associated with the first key position point includes:
in response to the first environment information including the first key position point, displaying a first playback control for the first recording video; and
outputting and playing the first recording video in response to a trigger operation of the object on the first playback control.

In all embodiments, the movement guidance prompt information comprises audio guidance prompt information generated based on the first key position point and a second key position point, the second key position point is a position point including second identification information, and in the second moving process, the object reaches the first key position point after reaching the second key position point.

An implementation in which the prompt output module outputs the movement guidance prompt information associated with the first key position point includes:
in response to the first environment information includes the first key position point, outputting and playing the audio guidance prompt information, wherein the audio guidance prompt information is used for instructing the object to move from the first key position point to the second key position point.

In all embodiments, the movement guidance prompt information includes a second playback control for a second recording video associated with the object, the second recording video is acquired by the AR device during the second moving process and is used for recording a moving path of the object, and the moving path includes the first key position point.

In all embodiments, after the prompt output module outputs the movement guidance prompt information, the data processing apparatus further includes:
a video reverse-order processing module configured to, in response to a trigger operation by the object on the second playback control, reverse the second recording video to create a reverse-order video corresponding to the second recording video; and
a video output module configured to output and play the reverse-order video, wherein the reverse-order video is used for indicating a whole route of the object moving from the first key position point to the first position point.

In all embodiments, a manner in which the prompt output module outputs the movement guidance prompt information associated with the first key position point includes:
in response to the first environment information including the first key position point, displaying a guidance control for an optimal moving route, the optimal moving route having a minimum duration required for movement from the first key position point to the first position point;
determining, in response to a trigger operation of the object on the guidance control, guidance prompt information comprising the optimal moving route as the movement guidance prompt information associated with the first key position point; and
outputting the movement guidance prompt information associated with the first key position point.

In all embodiments, a manner in which the prompt output module displays the guidance control for the optimal moving route includes:
in response to the first environment information including the first key position point, acquiring the second recording video associated with the object, the second recording video is acquired by the AR device during the second moving process and used for recording the moving path of the object;
determining, from the second recording video, a moving route of the object moving from the first key position point to the first position point;
comparing the moving route of the object with historical moving routes in a historical moving route set stored by the AR device to obtain the optimal moving route, wherein the historical moving routes comprise moving routes of historical objects moving from the first key position point to the first position point; and
displaying the guidance control for the optimal moving route.

In all embodiments, a manner in which the prompt output module compares the moving route of the object with the historical moving routes in the historical moving route set to obtain the optimal moving route includes:
determining the historical moving routes and the moving route of the object as candidate moving routes, and using the candidate moving routes to generate a candidate moving route set;
determining a duration required for each of the candidate moving routes to move from the first key position point to the first position point to obtain a duration set; and
determining a candidate moving route with a minimum duration in the duration set as the optimal moving route.

In all embodiments, a manner in which the prompt output module outputs the movement guidance prompt information associated with the first key position point includes:
in response to the first environment information including the first key position point, determining the movement guidance prompt information associated with the first key position point according to a navigation signal attribute of a region to which the first key position point belongs; and
outputting the movement guidance prompt information associated with the first key position point.

In all embodiments, a manner in which the prompt output module determines the movement guidance prompt information associated with the first key position point according to the navigation signal attribute of the region to which the first key position point belongs includes:
acquiring the navigation signal attribute of the region to which the first key position point belongs;
in response to the navigation signal attribute indicating that a navigation signal of the region is valid, acquiring a regional navigation map of the region, and determining the regional navigation map as the movement guidance prompt information associated with the first key position point; and
in response to the navigation signal attribute indicating that the navigation signal of the region is missing, acquiring the first recording video associated with the first key position point, and determining the first recording video as the movement guidance prompt information associated with the first key position point, wherein the first recording video is acquired by the AR device during the second moving process and is used for recording the first identification information and the ambient environment containing the first identification information.

In all embodiments, before the response module receives the first environment information of the object, the data processing apparatus further includes:
an information acquisition module configured to, in response to a position recording signal for the object being detected, receive second environment information of the object that is acquired by the AR device during the second moving process;
a position point determining module configured to, in response to the second environment information including a position point containing the first identification information, determine the position point containing the first identification information as the first key position point; and
a position point storage module configured to store and record the first key position point.

In all embodiments, the first position point is used for parking a transportation item.

Before the information acquisition module receives the second environment information of the object, the data processing apparatus further includes:
an analysis module configured to acquire driving data of the object for the transportation item, and performing state analysis on the driving data to obtain a driving state of the object; and
a signal conversion module configured to, in response to a first state switching signal for switching the driving state from a driving ongoing state to a driving stop state being detected, use the first state switching signal as the position recording signal for the object.

In all embodiments, after the position point storage module stores and records the first key position point, the data processing apparatus further includes:
a destination point determining module configured to, in response to a position stop recording signal being received, determine a position point at which the object is currently located as the second position point; and
an instruction generation module configured to generate an acquisition stop instruction, wherein the acquisition stop instruction is used for instructing the AR device to stop acquiring the second environment information.

In all embodiments, before the destination point determining module determines the position point at which the object is currently located as the second position point, the data processing apparatus further includes:
a data analysis module configured to acquire moving data of the object in the second moving process, and perform state analysis on the moving data of the object to obtain a moving state of the object; and
a first conversion module configured to, in response to a second state switching signal for switching the moving state from a continuous moving state to a continuous static state being detected, use the second state switching signal as the position stop recording signal for the object.

In all embodiments, before the destination point determining module determines the position point at which the object is currently located as the second position point, the data processing apparatus further includes:
an attribute detection module configured to detect the navigation signal attribute of the region to which the first key position point belongs; and
a second conversion module configured to, in response to an attribute switching signal for switching the navigation signal attribute from a missing navigation signal to a valid navigation signal being detected, using the attribute switching signal as the position stop recording signal for the object.

According to an aspect of the embodiments of this disclosure, a computer device is provided, including: a processor, a memory, and a network interface.

The processor is connected to the memory and the network interface, and the network provides a data communication function. The memory has a computer program stored therein, and the computer program, when executed by the processor, causes the processor to perform the method in the embodiments of this disclosure.

According to an aspect of the embodiments of this disclosure, a computer-readable storage medium is provided, having a computer program stored therein, the computer program including a program instruction, and the program instruction, when executed by a processor, performing the method in the embodiments of this disclosure.

According to an aspect of this disclosure, a computer program product is provided, including a computer program. The computer program is stored in a computer-readable storage medium (such as non-transitory computer-readable storage medium). A processor of a computer device reads the computer program from the computer-readable storage medium and executes the computer program to cause the computer device to perform the method provided in one aspect of the embodiments of this disclosure.

In the embodiments of this disclosure, in the second moving process performed by the object moving from the first position point (e.g., a parking position point of a transportation item) to the second position point (e.g., a destination position point), whether there is a position point containing the first identification information (also called target identification information) may be acquired and recorded via the AR device. If there is a position point containing the target identification information, the position point may be used as a key position point. In the first moving process performed by the object moving from the current position point (also called a starting position point) to the parking position point, if there is a searching requirement for the transportation item, the navigation request for the parking position point may be initiated. The AR device may acquire, in response to the navigation request, the first environmental information during the first moving process performed by the object moving to the parking position point. When recognizing that the first environmental information contains the first key position point (also called a target key position point), the AR device may determine that the object reaches the same key position point in a round-trip process. In this case, movement guidance prompt information related to the target key position point may be outputted to guide the object to reach the parking position point quickly and accurately. The AR device records key position points during the moving process performed by the object moving from the parking position point to the destination position point so that the object may provide, when searching for the transportation item, intelligent guidance for returning to the parking position point through the foregoing series of key position points, thereby well assisting the object to reach the parking position point. Even if there is no navigation satellite signal or another navigation coordinate signal in the round-trip process, the parking position point may be quickly and accurately reached through the intelligent guidance provided by the series of key position points without manually searching for a path to the parking position point, which may well improve the efficiency of searching for the transportation item.

### BRIEF DESCRIPTION OF THE DRAWINGS

FIG. 1 is a diagram of a network architecture of a data processing system according to embodiments of this disclosure.
FIG. 2a is a schematic diagram of a scene for recording key position points according to embodiments of this disclosure.
FIG. 2b is a schematic diagram of a scene for providing intelligent guidance based on key position points according to embodiments of this disclosure.
FIG. 3 is a schematic flowchart of a data processing method according to embodiments of this disclosure.
FIG. 4 is a schematic diagram of a scene for providing video guidance to a target object according to embodiments of this disclosure.
FIG. 5 is a schematic flowchart of outputting movement guidance prompt information of a target key position point according to embodiments of this disclosure.
FIG. 6 is a schematic diagram of a scene for outputting movement guidance prompt information according to embodiments of this disclosure.
FIG. 7 is a schematic flowchart of recognizing and recording a key position point according to embodiments of this disclosure.
FIG. 8 is a schematic diagram of an architecture of an AR device according to embodiments of this disclosure.
FIG. 9 is a system logic flowchart according to embodiments of this disclosure.
FIG. 10 is a schematic structural diagram of a data processing apparatus according to embodiments of this disclosure.
FIG. 11 is a schematic structural diagram of a computer device according to embodiments of this disclosure.

### DESCRIPTION OF EMBODIMENTS

All embodiments including the embodiments of both the claims and the specification (hereinafter referred to as "all embodiments of this disclosure") of this disclosure relates to related arts such as AR. For ease of understanding, the concepts of the related arts such as AR will be briefly described below.

AR technology: the AR technology is alternatively referred to as augmented reality. The AR technology is a technology that skillfully integrates virtual information with the real world. It simulates computer-generated virtual information such as text, images, three-dimensional (3D) models, music, and videos extensively using a variety of technical means such as multimedia, 3D modeling, real-time registration, intelligent interaction, and sensing, and then applies the virtual information to the real world. Two types of information complement each other to "augment" the real world. It promotes the integration of real world information and virtual world information content, simulates entity information that is originally difficult to be experienced in a space range of the real world based on computer science and technology, and effectively applies virtual information content in the real world, which can be perceived by human senses in this process, thereby achieving sensory experience beyond reality. After the real environment and the virtual object overlap, they can exist simultaneously in the same picture and space.

Wearable AR device: the wearable AR device is a wearable device and usually includes a head-mounted display, a camera, a sensor, a computer processor, and the like. The wearable AR device may capture information about a head motion and an ambient environment of an object (such as a user) through the camera and the sensor, and then transmit the information to the computer processor for processing. The computer processor may generate virtual reality content based on the information about the head motion and the ambient environment of the object and displays the virtual reality content on the head-mounted display.

All embodiments of this disclosure further relate to the related arts such as artificial intelligence (AI). For ease of understanding, AI and related concepts will be described below.

AI involves a theory, a method, a technology, and an application system that use a digital computer or a machine controlled by the digital computer to simulate, extend, and expand human intelligence, perceive an environment, acquire knowledge, and use knowledge to obtain an optimal result. In other words, AI is a comprehensive technology of computer science and attempts to understand the essence of intelligence and produce a new intelligent machine that can react in a manner similar to human intelligence. AI is to study the design principles and implementation methods of various intelligent machines to enable the machines to have the functions of perception, reasoning, and decision-making.

The AI technology is a comprehensive discipline and relates to a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a nature language processing technology, and machine learning/deep learning.

With the research and progress of the AI technology, the AI technology has been researched and applied to a plurality of fields, such as common smart homes, smart wearable devices, virtual assistants, smart speakers, intelligent marketing, unmanned driving, autonomous driving, unmanned aerial vehicles, robots, smart healthcare, and intelligent customer service. With the development of the technology, the AI technology will be applied to more fields, and play an increasingly important role.

The solutions provided in the embodiments of this disclosure belong to CV technology and speech technology in the field of AI.

The CV technology is a science that studies how to use a machine to "see", and furthermore, that uses a camera and a computer to replace human eyes to perform machine vision such as recognition and measurement on a target and further perform graphic processing so that the computer processes the target into an image more suitable for human eyes to observe, or an image transmitted to an instrument for detection. As a scientific discipline, CV studies related theories and technologies and attempts to establish an AI system that can acquire information from images or multi-dimensional data. The CV technology generally includes technologies such as image processing, image recognition, image semantic understanding, image retrieval, optical character recognition (OCR), video processing, video semantic understanding, video content/behavior recognition, 3D object reconstruction, 3D technology, virtual reality, AR, synchronous positioning and map construction, automatic driving, and intelligent transportation.

Key technologies of the speech technology include an automatic speech recognition technology, a speech synthesis technology, and a voiceprint recognition technology. Making a computer listen, see, speak, and feel is a development direction of human-computer interaction in the future, and speech becomes one of the most favored human-computer interaction modes in the future.

In the embodiments of this disclosure, ambient environment information of an object (also called a target object hereinafter, which may be any object, such as a user or an intelligent robot) in a moving process may be recognized and acquired through the CV technology, and speech data of the target object is recognized and acquired through the speech technology. An environment where the target object is located changes as the target object moves, and the ambient environment information herein refers to change information, recorded through the CV technology, of the environment where the target object is located).

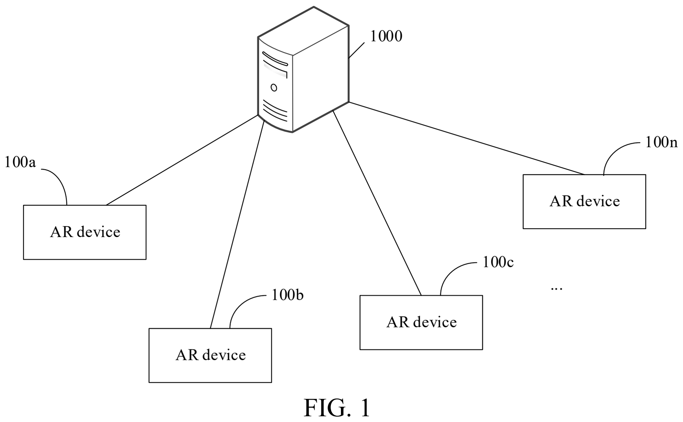

For ease of understanding, FIG. 1 is a diagram of a network architecture of a data processing system according to embodiments of this disclosure. As shown in FIG. 1, the network architecture may include a business server 1000 and an AR device cluster. The AR device cluster may include one or more AR devices. The number of AR devices is not limited herein. As shown in FIG. 1, the plurality of AR devices may include an AR device 100a, an AR device 100b, an AR device 100c, ..., and an AR device 100n. As shown in FIG. 1, the AR device 100a, the AR device 100b, the AR device 100c, ..., and the AR device 100n may be connected to the business server 1000 through a network so that the AR devices may perform data interaction with the business server 1000 through the network connection.

Each AR device shown in FIG. 1 may be installed with assemblies configured to acquire real environment information (the real environment information may refer to information about an environment in the real world), such as a camera and a sensor. Therefore, each AR device may have an environment information acquisition function through the camera and the sensor assemblies, and the business server 1000 may receive the environment information acquired by each AR device.

In all embodiments of this disclosure, an AR device may be selected from the plurality of AR devices as a target AR device. The AR device may include: a smart device carrying a multimedia data processing function (for example, a video data playback function, a music data playback function, and a text data playback function), such as smart glasses and smart watches, but is not limited thereto. For example, in all embodiments of this disclosure, the AR device 100a shown in FIG. 1 may be used as the target AR device. The target AR device may be integrated with assemblies such as a head-mounted display, a camera, a sensor, and a computer processor. In this case, the target AR device may acquire information about a head motion and an ambient environment of a target object through the camera and the sensor. The target AR device may transmit the information to the computer processor for processing. The computer processor may generate virtual reality content according to the information about the head motion and the ambient environment of the target object and display the virtual reality content on the head-mounted display. Therefore, the target object may view the virtual reality content based on the head-mounted display. The virtual reality content generated by the AR device may be uploaded to the business server 1000 for unified storage by the business server 1000. After acquiring the information about the head motion and the ambient environment of the target object, the target AR device may transmit the information to the business server 1000, and the business server 1000 generates the virtual reality content. The business server 1000 may return the virtual reality content to the target AR device, and the target AR device may display the virtual reality content on the head-mounted display.

The virtual reality content in this disclosure may refer to media content presented in any media presentation form. The media presentation form may include, but is not limited to, an image form, a video form, a text form, an audio form, or the like. The media presentation form may alternatively be a combination of any two or more of the foregoing forms. In other words, the virtual reality content in this disclosure may refer to video content presented in the video form, image content presented in the image form, text content presented in the text form, audio content presented in the audio form, or the like. In this disclosure, environment information (also called ambient environment information or environmental change information) of a target object (which may refer to any object, where the object in this disclosure may refer to a user, an intelligent robot, or the like) in a moving process may be acquired via the AR device. The moving process herein may refer to a process in which the target object, after parking an item at a position point, moves from the position point to another position point (for example, walk to another position point). In this disclosure, the item parked by the target object is referred to as a transportation (also called target item) hereinafter, a position point where the item is parked is referred to as a parking position point (also called a first position point), and another position point to which the object is moved is referred to as a destination position point (also called a second position point). For the acquired environmental change information, data recognition and calculation may be performed on the environmental change information through the computer processor to obtain key position points in the environmental change information. When the target object has a requirement of returning to the parking position point from the destination position point to search for the target item, intelligent guidance information for returning to the parking position point may be provided to the target object through the recorded series of key position points. The intelligent guidance information herein is route guidance information obtained based on a series of key position points recorded by the computer processor, and the target object may use the route guidance information as a path reference for returning to the parking position point, so as to return to the parking position point.

For ease of understanding, in all embodiments of this disclosure, the data processing method provided in this disclosure is described using an example in which the target item is a vehicle (for example, a car). Assuming that after the target object parks the vehicle at a particular position point (for example, a particular parking space B in a parking lot A), the target object walks to a shopping mall C, the parking space B herein may be understood as the parking position point, and a position point where the shopping mall C is located may be understood as the destination position point. The process of the target object walking to the shopping mall C from the parking space B in the parking lot A may be understood as a moving process of the target object (that is, a process of moving from the parking position point to the destination position point, which may be referred to as a second moving process in this disclosure). The target object may wear an AR device, and environmental change information (for ease of distinction, the environmental change information is referred to as second environment information or second environmental change information herein) of the target object in the second moving process is acquired via the AR device. A series of key position points in the second environmental change information may be continuously recognized and recorded via the AR device. The key position point herein may refer to a position point containing identification information having a high degree of identifiability. For example, if the AR device recognizes that ambient environment information of the target object includes a numbered electric pole, and the numbered electric pole possesses/exhibits a high level of identifiability (or is highly identifiable), the numbered electric pole may be used as a piece of identification information, and a position point where the numbered electric pole is located may be used as the key position point and stored and recorded. For another example, the AR device recognizes that there is a particular speech feature signal (for example, a speech feature signal of "welcome" in a shopping mall) in the ambient environment information (second environmental change information) of the target object. The speech feature signal in the shopping mall may very clearly characterize a current position of the target object and is highly identifiable. Therefore, the speech feature signal may further be used as a piece of identification information. A position point where the speech feature signal is recognized may be used as the key position point and stored and recorded. That is, the identification information herein may refer to identifiable and easily memorized information, and includes, but is not limited to, text information (such as a serial number of an electric pole or a name of a shopping mall), a building (such as an elevator or a block), a sensor signal (such as a service set identifier (SSID) and a media access control (MAC) address of wireless fidelity (WIFI), a universally unique identifier (UUID) of Bluetooth, or other hardware information), a magnetic field feature signal, a speech feature signal (such as "welcome" in a shopping mall), and the like that can be recognized by the AR device. As used herein, a "high degree of identifiability" refers to a characteristic of the identification information that enables the AR device to reliably and unambiguously recognize the corresponding target object or environmental feature. For example, such information may include features that are unique, visually distinct, or persistently present in the environment, such as a numbered utility pole, a uniquely shaped landmark, or a sign with distinguishing textual or graphical content. The high degree of identifiability may be determined based on factors such as the uniqueness of the feature within a geographic area, the stability or permanence of the feature over time, and the ability of the AR device's recognition algorithms to consistently detect the feature under varying environmental conditions. In the second moving process of the target object, the AR device may continuously acquire the second environmental change information of the target object. When a position point reached by the target object contains identification information, the AR device may use the position point as a key position point and store and record the key position point until the target object reaches the destination position point. In this way, a series of key position points may be generated in a route of the target object moving from the parking space B to the shopping mall C, and the key position points may be sorted based on an order of time at which the key position points are recognized and recorded. Thus, a key path formed by the key position points may be sequentially generated. For example, in the route of the target object moving from the parking space B to the shopping mall C, the AR device first recognizes a key position point v, and then stores and records the key position point v. After recognizing the key position point, the AR device recognizes a key position point d, and then stores and records the key position point d. Then, the AR device recognizes a key position point e, and then stores and records the key position point e. It can be learned that a time at which the key position point v is recognized and recorded by the AR device is earlier than a time at which the key position point d is recognized and recorded by the AR device. The time at which the key position point d is recognized and recorded by the AR device is earlier than a time at which the key position point e is recognized and recorded by the AR device. Based on this, after the key position point v, the key position point d, and the key position point e are sorted according to an order of the time at which the key position points are recognized and recorded, a key path may be generated as follows: {the key position point v-> the key position point d-> the key position point e}. The key path {the key position point v-> the key position point d-> the key position point e} is a path of the target object moving from the parking space B to the shopping mall C.

Further, in a process of the target object returning to the parking position point from the destination position point, if the target object does not know how to reach the parking position point at a position point, the target object has a searching requirement for the vehicle. In this case, the target object may initiate a navigation request for the vehicle, and then the AR device may acquire, in response to the navigation request, environmental change information (for ease of distinction, referred to as first environment information or first environmental change information) of the target object in a moving process (i.e., a process of moving from a current position point to the parking position point, which may be referred to as a first moving process in this disclosure). The current position point of the target object is a position point where the target object reaches in the process of returning to the parking position point from the destination position point, and the position point may include the destination position point. That is, the target object may initiate the navigation request at the destination position point, and in all embodiments of this disclosure, the current position point of the target object may be referred to as a starting position point. Based on the series of key position points that are recorded by the AR device and generated by the target object in the second moving process, the AR device may continuously recognize whether the first environmental change information in the first moving process contains a key position point in the second moving process that is stored and recorded by the AR device. That is, in the second moving process of the target object moving from the parking position point to the destination position point, the AR device may store and record a series of key position points based on the second environmental change information to generate a key path. In the first moving process of the target object returning to the parking position point from the destination position point, the second environmental change information of the target object may be recognized based on the key path stored and recorded in the second moving process to determine whether the target object reaches a key position point in the key path. If it is recognized that the first environmental change information contains a key position point (which may be referred to as a target key position point) recorded in the second moving process, the AR device may determine that the target object reaches the same position point in the round-trip process. The AR device may output movement guidance prompt information associated with the target key position point to guide the target object to quickly reach the parking position point where the vehicle is parked.

In this disclosure, the AR device may continuously record environmental change information in the process of the target object moving from the parking position point to the destination position point and recognize and record a series of key position points so that when the target object returns to search for the target item, intelligent guidance for returning to the parking position point of the target item is provided through the foregoing recorded series of key position points, thereby well assisting the target object to search for the target item, and improving the efficiency of searching for the target item. Meanwhile, the method for searching for the target item provided in this disclosure does not need a GNSS signal. Therefore, for any position point (for example, the parking position point, the destination position point, or any key position point reached in the moving process), if the position point does not have the GNSS signal, the solution provided in this disclosure may still be adopted to provide route guidance to the target object for searching for the target item, thereby assisting the target object quickly to reach the position point where the target item is parked.

The method provided in the embodiments of this disclosure may be performed by a computer device, and the computer device includes, but is not limited to, an AR device or a business server. The business server may be an independent physical server, may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and AI platform.

The AR device and the business server may be directly or indirectly connected in a wired or wireless communication manner. This is not limited in this disclosure.

In some embodiments, the foregoing computer device (for example, the foregoing business server 1000, AR device 100a, or AR device 100b) may be a node in a distributed system. The distributed system may be a blockchain system, and the blockchain system may be a distributed system formed by connecting a plurality of nodes through network communication. In the distributed system, a computer device in any form, for example, an electronic device such as a business server or a terminal device, may become a node in the blockchain system by joining a peer-to-peer network. For ease of understanding, the concept of the blockchain will be described below. The blockchain is a new application mode of computer technologies such as distributed data storage, peer-to-peer transmission, a consensus mechanism, and an encryption algorithm, and is mainly configured to organize data in chronological order and encrypt the data into a ledger so that the data cannot be tampered with and forged, and may be verified, stored, and updated simultaneously. When the computer device is a blockchain node, due to the tamper-resistant and anti-counterfeiting characteristics of the blockchain, data (for example, the first environmental change information, the second environmental change information, the series of key position points in the second environmental change information, and the generated key path) in this disclosure is authentic and secure so that a more reliable result may be obtained after relevant data processing is performed based on the data.

In all embodiments of this disclosure, related data such as user information and user data (environmental change information of a user in a moving process) is acquired only after manual authorization and permission of the user (that is, consent of the user). That is, when the above embodiments of this disclosure are applied to specific products or technologies, the method and related functions provided by the embodiments of this disclosure are run with permission or consent of the user (the user may actively start the functions provided by the embodiments of this disclosure), and the acquisition, usage, and processing of related data need to comply with relevant laws, regulations, and standards of relevant countries and regions.

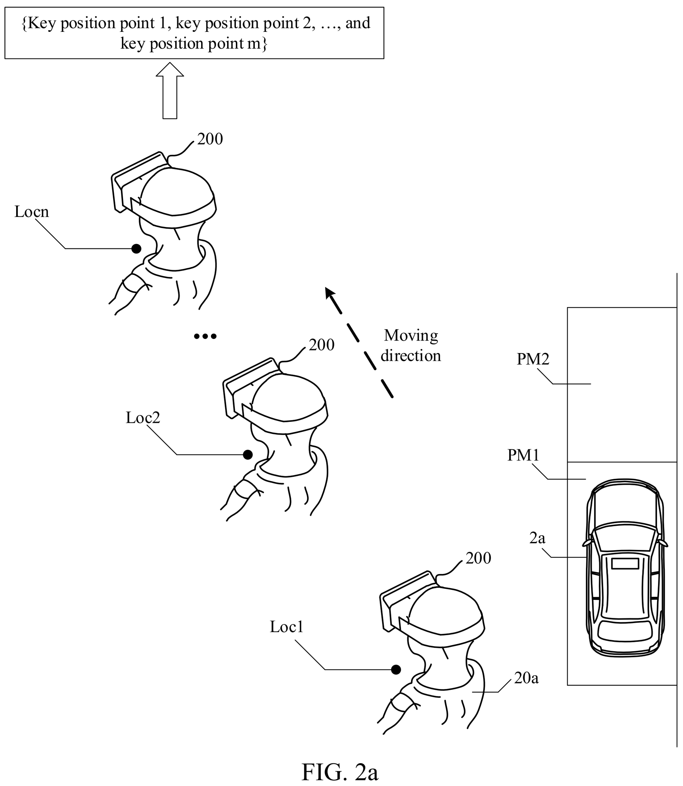

The embodiments of this disclosure may be applied to various scenes, including but not limited to, cloud computing technology, AI, intelligent transportation, assisted driving, and the like. For ease of understanding, FIG. 2a is a schematic diagram of a scene for recording key position points according to embodiments of this disclosure. The scene shown in FIG. 2a is a scene described using an example in which the target item is a car. As shown in FIG. 2a, after an object 20a (target object) drives a car 2a (target item) to a parking lot and parks the car 2a in a parking space PM1, the object 20a gets off the car and walks to a position point Locn of a shopping mall. In this case, the position point Locn may be understood as a destination position point of the target object, and a position point Loc1 where the object 20a is located beside a parking space PM2 may be understood as a parking position point of the target item.

When the object 20a is located at the parking position point Loc1, the object 20a may wear an AR device 200, and environmental change information of the object 20a walking from the parking position point Loc1 to the destination position point Locn may be acquired via the AR device 200. The AR device 200 may recognize whether a position point where the object 20a is located contains identifiable information (the identifiable information may be referred to as identification information). If a position point contains the identification information, the AR device 200 may use the position point as a key position point in the moving process and may recognize a series of key position points until the object 20a reaches the destination position point Locn. For example, as shown in FIG. 2a, when the object 20a moves along a moving direction shown in FIG. 2a and reaches a position point Loc2, the AR device recognizes that the position point Loc2 has a numbered electric pole. The numbered electric pole is identifiable and may be used as a piece of identification information. Therefore, the AR device may use the position point Loc2 as a key position point. As shown in FIG. 2a, until the object 20a reaches the destination position point Locn, the AR device may acquire a series of key position points, including {a key position point 1, a key position point 2, ..., and a key position point m}. The AR device may store and record these key position points. When storing and recording the foregoing key position points, the AR device may store and record the key position points according to the time at which the key position points are recognized. For example, the AR device may store and record the key position points in sequence according to an order of the time at which the key position points are recognized.

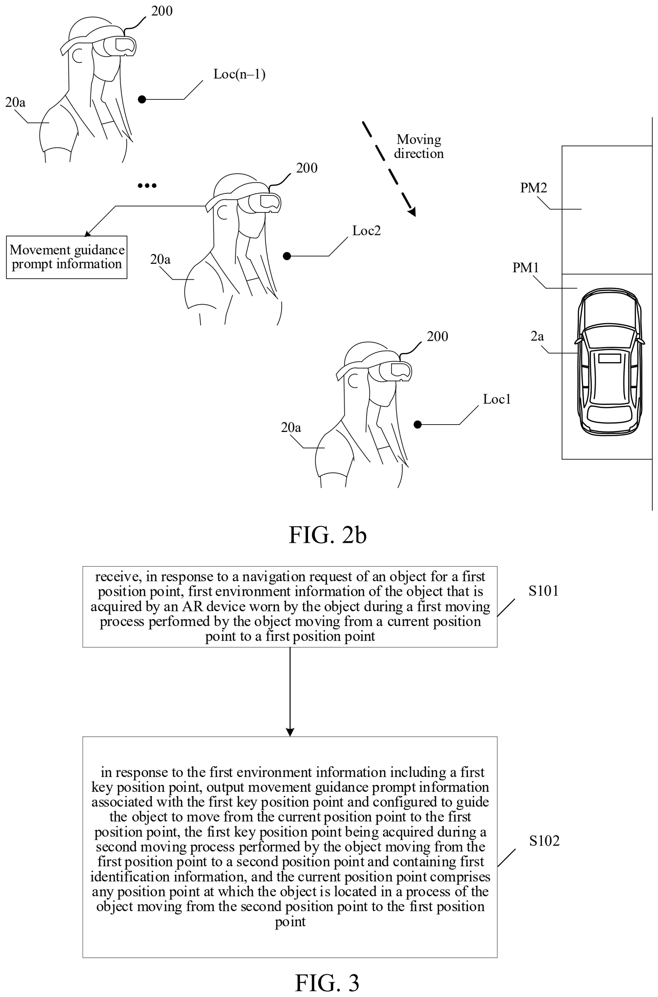

When the object 20a searches for the car 2a, intelligent guidance may be provided for the object 20a based on the foregoing key position points to guide the object 20a to reach the parking position point Loc1 (i.e., the parking space PM1) where the car 2a is parked. For ease of understanding, FIG. 2b is a schematic diagram of a scene for providing intelligent guidance based on key position points according to embodiments of this disclosure. As shown in FIG. 2b, assuming that in a process of an object 20a returning to a parking position point Loc1 where a car 2a is located from a position point Locn where a shopping mall is located, when the object 20a is located at a position point Loc(n-1), the object 20a does not know a moving path to reach the parking position point Loc1. Thus, the object 20a may initiate a navigation request for the car 2a (equivalent to a navigation request for the parking position point Loc1 where the car 2a is located), and the AR device 200 may start to acquire environmental change information of the object 20a starting to move from the position point (n-1) in response to the navigation request. Each time the object 20a moves to a key position point in the foregoing series of key position points (including {a key position point 1, a key position point 2, ..., and a key position point m}), the AR device 200 may output movement guidance prompt information for the key position point. The movement guidance prompt information herein may be determined based on a series of key position points recorded by the AR device. It may be learned from the foregoing description that: in a process of the object 20a reaching the destination position point Locn, the AR device records a series of key position points in chronological order. In the process of the object 20a returning to the parking position point Loc1 from the destination position point Locn, the AR device may sort the recorded key position points in chronological order to obtain an auxiliary position point sequence. The movement guidance prompt information may be determined according to the auxiliary position point sequence. For example, the movement guidance prompt information may include information about a next key position point of a current key position point of the target object (i.e., a next key position point of the current key position point in the foregoing auxiliary position point sequence) to not only prompt that the object 20a reached the same key position point in the round-trip moving process but also prompt a position point that the object 20a will subsequently reach (i.e., a next key position point of the key position point currently reached), thereby guiding a subsequent moving route of the object 20a. For example, as shown in FIG. 2b, when the object 20a reaches a position point Loc2, the AR device 200 recognizes that the position point Loc2 is a key position point. Thus, the AR device 200 may output movement guidance prompt information for the position point Loc2 to prompt that the object 20a reaches the same position point. It can be learned that through the foregoing series of key position points, intelligent guidance for the object 20a to reach the parking position point Loc1 may be used until the object 20a reaches the parking position point.

For ease of understanding, the data processing method provided in the embodiments of this disclosure will be described in detail below with reference to the accompanying drawings. FIG. 3 is a schematic flowchart of a data processing method according to embodiments of this disclosure. The process may be performed by a computer device, and the computer device may be an AR device or a business server shown in FIG. 1. As shown in FIG. 3, the process may include at least the following operation S101 to operation S102.

Operation S101: receive, in response to a navigation request of an object for a first position point, first environment information of the object that is acquired by an AR device worn by the object during a first moving process performed by the object moving from a current position point to a first position point.

In this disclosure, the provided data processing method may refer to a seeking and guiding method for a target item and may be implemented in a scene in which the target object parks the target item at a position point and moves to another position point, and then needs to return to the parking position point of the target item from the another position point. For example, using the target item being a car as an example, assuming that the target object parks the car at a parking space in a parking lot of a shopping mall, the target object goes to the shopping mall for shopping, and after the target object ends shopping, the target object wants to return to the parking lot of the shopping mall and find the parking space where the car of the target object is parked, the car finding scene may be applied to the method provided in all embodiments of this disclosure. The target object may refer to any object, and the object may refer to a user, an intelligent robot, or the like. In other words, the target object may refer to any user, any intelligent robot, or the like. The target item may refer to any item, and the item may refer to a vehicle (for example, a vehicle), a picture, a skateboard, or the like. When the target object has a searching requirement for the target item, the target object may initiate a navigation request for the parking position point used for parking the target item on an AR device worn by the target object, and the AR device may acquire, in response to the navigation request, environmental change information (for ease of distinguishing from subsequent operations, the environmental change information is referred to as the first environmental change information herein) of the target object moving from the starting position point to the parking position point of the target item.

The AR device may refer to a wearable device that integrates assemblies such as a head-mounted display, a camera, a sensor, and a computer processor. The camera and the sensor may capture and acquire ambient environment information of the target object, and the computer processor may calculate the acquired ambient environment information to generate virtual reality content and display the virtual reality content on the head-mounted display. The AR device may detect whether the target object has a requirement for acquiring guidance information for searching for the target item. When it is detected that the target object initiates the navigation request for the target item, the target object has the requirement for acquiring the guidance information for searching for the target item so that the AR device may acquire, in response to the navigation request of the target object, the first environmental change information of the target object from the starting position point (the starting position point is a position point where the target object initiates the navigation request for the target item in the process of the target object returning to the parking position point of the target item from the destination position point) until the target object successfully reaches the parking position point of the target item. That is, the AR device may continuously acquire ambient environment information of the target object moving from the starting position point to the parking position point to obtain the first environmental change information (that is, the first environmental change information refers to continuously changing ambient environment information acquired in the process (also called first moving process) of the target object moving from the starting position point to the parking position point). The AR device may provide corresponding movement guidance information to the target object through the acquired first environmental change information so that the target object can quickly reach the parking position point of the target item.

A manner in which the target object initiates the navigation request for the target item may be implemented through a trigger operation on a navigation control in the AR device. The trigger operation may contain a contact operation such as clicking or long pressing, or may contain a non-contact operation such as speech or a gesture. This is not limited herein.

Operation S102: in response to the first environment information including a first key position point, output movement guidance prompt information associated with the first key position point and configured to guide the object to move from the current position point to the first position point, the first key position point being acquired during a second moving process performed by the object moving from the first position point to a second position point and containing first identification information, and the current position point comprises any position point at which the object is located in a process of the object moving from the second position point to the first position point.

In this disclosure, the foregoing process of the target object moving from the starting position point to the parking position point of the target item may be referred to as the first moving process. The first environmental change information may refer to continuously changing ambient environment information acquired by the AR device in the first moving process. The key position point in this disclosure may be determined by the AR device based on environmental change information acquired in a second moving process (referred to as second environmental change information). The parking position point of the target item may refer to a position point where the target object parks the target item (for example, a position point where the target object parks a car). After parking the target item, the target object may move from the parking position point to another position point to perform a corresponding activity behavior (for example, moving to a shopping mall to generate a shopping activity behavior). The another position point to which the target object moves from the parking position point may be used as a destination of the target object, and then the position point to which the target object moves may be referred to as the destination position point. The second moving process refers to a process of the target object moving from the parking position point to the destination position point. In the process of the target object moving to the destination position point, the target object may select to use the AR device to continuously acquire ambient environment information in this process to obtain the second environmental change information so that the AR device may continuously recognize, based on the second environmental change information, a series of key position points reached by the target object in the process. Therefore, in the process of the target object returning to the parking position point of the target item from the destination position point, intelligent guidance for reaching the parking position point may be obtained through the series of key position points.

That is, in this disclosure, in the process of the target object moving from the parking position point to the destination position point, the AR device acquires and recognizes the second environmental change information. When the target object reaches a position point, the AR device recognizes and detects ambient environment information of the position point to determine that the ambient environment information contains identifiable information (referred to as identification information). Thus, the AR device may determine the position point as a key position point. Since the identification information is identifiable, the target object may well determine its current position through the identification information in the key position point. Based on this, the AR device may continuously recognize and obtain a series of key position points in the second moving process of the target object. The AR device may store and record the key position points based on an order of the time at which the key position points are recognized.

Based on the foregoing description, in the process of the target object moving from the starting position point to the parking position point of the target item, if the first environmental change information acquired by the AR device contains a key position point recorded in the second moving process, the AR device may output movement guidance prompt information associated with the key position point to prompt that the target object reaches the same position point in the second moving process. That is, the target key position point herein may refer to any key position point recorded in the second moving process. The target identification information (also called first identification information) is identification information included in the target key position point. Since the target object moves from the parking position point to the destination position point, a path of the target object returning to the parking position point from the destination position point may be a path opposite to a path of the target object moving to the destination position point from the parking position point. The starting position point is a position point on the way of the target object returning to the parking position point from the destination position point. Therefore, it can be learned that the starting position point is located in the path between the destination position point and the parking position point. In other words, the path between the destination position point and the parking position point contains the starting position point.

When the first environmental change information contains the target key position point, the movement guidance prompt information associated with the target key position point may be outputted to guide the target object. The movement guidance prompt information associated with the target key position point herein refers to guidance prompt information that can only be determined based on the target key position point, and the guidance prompt information contains prompt content for the target key position point. In the process of the target object moving from the parking position point to the destination position point, the AR device may capture environmental change information in the process through the camera and the sensor. That is, the camera and the sensor may acquire a video containing the environmental change information. For each key position point, a video recording ambient environment information thereof will be provided. In this disclosure, the video recording the ambient environment information may be referred to as a recording video. Based on this, it can be learned that for the target key position point, the AR device records a recording video of the target key position point. The recording video is acquired by the AR device in the process of the target object moving from the parking position point to the destination position point and is configured for recording the target identification information and an ambient environment where the target identification information is located. The recording video may also be acquired by other devices carried by the target object, and may be transmitted to the AR device via a communication connection between these devices and the AR device. However, in this disclosure, in the process of the target object returning to the parking position point, if the target object reaches a target key position point, to facilitate intuitively and clearly presenting the route guidance to the target object, the movement guidance prompt information of the target key position point outputted in this disclosure may refer to a recording video associated with the target key position point. In other words, in the process of the target object searching for the target item, each time the target object reaches a target key position point, a recording video may be obtained as intelligent guidance.

When the movement guidance prompt information associated with the target key position point includes a recording video (also called a first recording video) associated with the target key position point and the first environmental change information acquired by the AR device contains the target key position point, a manner of outputting the movement guidance prompt information associated with the target key position point may be as follows. The AR device may first acquire the recording video associated with the target key position point, and output and display a playback control for the recording video (for ease of distinguishing from subsequent operations, the playback control is referred to as a first playback control herein). The target object may play and watch the recording video through a trigger operation on the first playback control. After the target object generates the trigger operation on the first playback control, the AR device may output and play the recording video in response to the trigger operation.

In all embodiments, the AR device may further acquire a next key position point of the target key position point (i.e., a next key position point to which the target object will return in the process of returning to the parking position point). Since the key position points are recognized and recorded by the AR device one by one in the process of the target object moving from the parking position point to the destination position point, the key position points have a chronological order. In the process of the target object moving from the destination position point to the parking position point, a moving path of the target object returning to the parking position point is opposite to a path of the target object moving to the destination position point. For the key position points recognized and recorded in the process of the target object moving to the destination position point, the target object reaches these key position points one by one in a reverse order. Turning back to FIG. 2A for an example, after the target object 20a parks the target item (e.g., car 2a), the target object moves along a sequence of locations: Loc1, Loc2, Loc3, ... , Locn. Here Locn is the destination point. When target object 20a needs to return to target item 2a, it retraces the sequence in reverse order: Locn, Loc(n-1), ... , Loc3, Loc2, Loc1. Based on this, in the process of the target object returning to the parking position point, the AR device may use a previous key position point of the target key position point as a position point to which the target object is to move (which may be referred to as a desired reaching position point) in a stored and recorded key position point sequence (a sequence obtained by sorting the key position points according to an order of recognition time of the key position points). Similarly, in this disclosure, a recording video of the desired reaching position point may further be outputted to prompt that the target object currently reaches the target key position point, and a next position point to be reached is the desired reaching position point. That is, the movement guidance prompt information associated with the target key position point may include the recording video of the target key position point and the recording video of the desired reaching position point. The two recording videos may intuitively and clearly provide intelligent guidance to the target object so that the target object may reach the parking position point more quickly. In summary, in this disclosure, the movement guidance prompt information associated with the target key position point may refer to the recording video associated with the target key position point. The recording video contains a recording video configured for recording the ambient environment information of the target key position point, or may contain a recording video configured for recording ambient environment information of the desired reaching position point (i.e., the previous key position point of the target key position point in the key position point sequence).

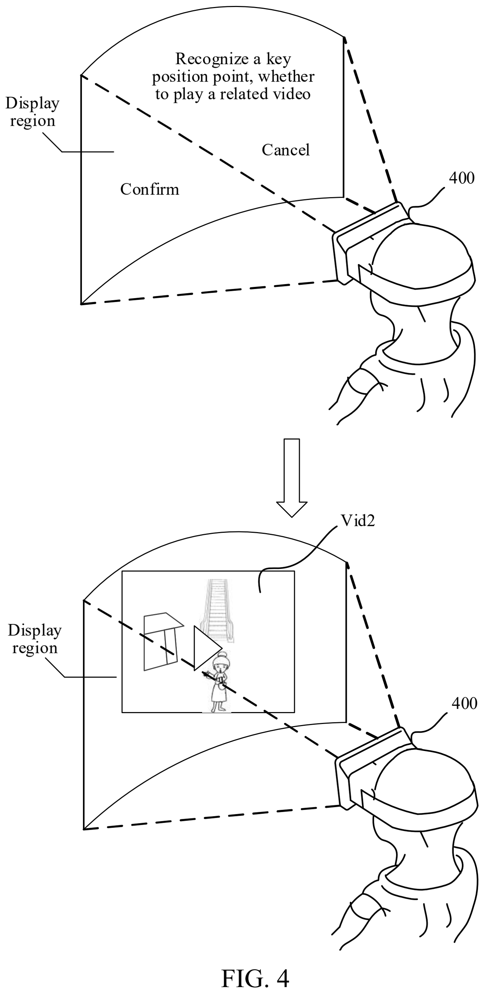

For ease of understanding, FIG. 4 is a schematic diagram of a scene for providing video guidance to a target object according to embodiments of this disclosure. As shown in FIG. 4, assuming that when the target object reaches a position point in a process of returning to the parking position point, an AR device 400 recognizes that the position point is a key position point, the AR device 400 may acquire a recording video (which is assumed to be a recording video Vid2) associated with the key position point. Subsequently, the AR device 400 may display, in a display region shown in FIG. 4 through a head-mounted display, playback prompt information "recognize a key position point, whether to play a related video" for the recording video Vid2 and a confirmation control and a cancel control for the playback prompt information. The target object may play and watch the recording video Vid2 through a trigger operation on the confirmation control, or may refuse to play the recorded video Vid2 through a trigger operation on the cancel control. As shown in FIG. 4, after the target object generates the trigger operation on the confirmation control, the AR device 400 may play the recording video Vid2 in the display region. The target object may clearly and intuitively see, through the recording video Vid2, a related process when the target object goes through the position point on the way to the destination position point, thereby obtaining guidance for returning to the parking position point. The AR device 400 may further acquire a next position point that the target object is to reach of the position point and acquire a recording video of the position point. After playing the recording video Vid2 of the current position point, the AR device 400 may play the recording video of the next key position point to guide a subsequent moving direction of the target object.

The movement guidance prompt information of the target key position point may not be limited to being presented in a video mode. Alternatively, the movement guidance prompt information of the target key position point may be presented in an audio mode. The audio may prompt that the target object has reached the target key position point and guide a next key position point to which the target object needs to move. The next key position point herein is a previous key position point (which may be referred to as a preceding key position point, i.e., a next desired reaching position point in the process of returning to the parking position point, also called a second key position point) of the target key position point in the key position point sequence stored and recorded in the second moving process. That is, the audio prompt information may contain related information of the target key position point and the preceding key position point. Based on the foregoing description, the movement guidance prompt information associated with the target key position point refers to audio guidance prompt information associated with the target key position point. The audio guidance prompt information may be generated based on the target key position point and the preceding key position point, and the preceding key position point also contains identification information (in this disclosure, the identification information contained in the preceding key position point may be referred to as preceding identification information (also called second identification information)). In the process of the target object moving from the parking position point to the destination position point, a time at which the target object reaches the target key position point is later than a time at which the target object reaches the preceding key position point, that is the target object reaches the target key position point after reaching the preceding key position point. In this case, an implementation of outputting, when the first environmental change information acquired by the AR device contains the target key position point, the movement guidance prompt information associated with the target key position point may be as follows. When the first environmental change information acquired by the AR device contains the target key position point, the audio guidance prompt information may be outputted and played. The audio guidance prompt information is configured for instructing the target object to move from the target key position point to the preceding key position point. For example, taking the target key position point being a shopping mall CG as an example, assuming that the preceding key position point is a central park MU, the audio guidance prompt information may be "you have reached the shopping mall CG, and then you can go to the central park MU", and the target object may determine, through the audio guidance prompt information, a position point to which the target object will go subsequently.

When the target object reaches the target key position point, the AR device may synchronously output the recording video and the audio guidance prompt information. Through the synchronous output of the picture and the sound, intelligent guidance for the target object to go to the parking position point may be provided more intuitively.

In addition, as can be known from the foregoing description, the AR device records a complete recording video of the target object from the parking position point to the destination position point. Therefore, when the target object returns to the parking position point from the destination position point, the target object may further select to play and watch the complete recording video to determine a path of the target object to the parking position point. The complete recording video (also called a second recording video) from the parking position point to the destination position point may be referred to as a global video in this disclosure. To clearly present the path to the parking position point, in this disclosure, reverse processing may be performed on the global video so that the global video is converted into a video from the destination position point to the parking position point, thereby presenting a global route from the destination position point to the parking position point. The target object may actively initiate a playback request for the global video (for example, actively initiate the playback request for the global video at the destination position point or any other position point) or passively initiate the playback request for the global video. For example, the movement guidance prompt information outputted by the AR device may carry a second playback control for the global video (the global video is acquired by the AR device and configured for recording a moving path of the target object in the process of the target object moving from the parking position point to the destination position point, and the moving path recorded by the global video includes the target key position point). The global video may also be acquired by other devices carried by the target object, and may be transmitted to the AR device via a communication connection between these devices and the AR device. The target object may play and watch the global video through a trigger operation on the second playback control. After the target object generates the trigger operation on the second playback control, the AR device may perform reverse processing on the global video in response to the trigger operation, thereby obtaining a reverse-order video of the global video. Subsequently, the AR device may output and play the reverse-order video. The reverse-order video is configured for indicating a global route of the target object moving from the target key position point to the parking position point, and then the target object may gradually reach the parking position point according to the global route. In all embodiments, the reverse processing of a video (or reversing the video) includes arranging the frame sequence of the video in a reverse order to achieve an effect of playing from the end to the beginning of the video.

In the process of the target object moving from the destination position point to the parking position point, a reached position point may have a GNSS signal or may not have a GNSS signal. A position point having the GNSS signal may have a corresponding navigation map. In this disclosure, the navigation map containing the position point may be acquired and displayed to the target object so that the target object may determine its subsequent moving route through the navigation map. However, if the position point does not have the GNSS signal, in this disclosure, the recording video or audio guidance prompt information of the position point may be outputted in the foregoing mode to guide a next moving route of the target object. That is, a manner of outputting, when the first environmental change information acquired by the AR device contains the target key position point, the movement guidance prompt information associated with the target key position point may alternatively be as follows. When the first environmental change information acquired by the AR device contains the target key position point, the movement guidance prompt information associated with the target key position point may be determined according to a navigation signal attribute of a region to which the target key position point belongs. Subsequently, the movement guidance prompt information associated with the target key position point may be outputted.

A manner of determining the movement guidance prompt information associated with the target key position point according to the navigation signal attribute of the region to which the target key position point belongs may be as follows. The navigation signal attribute of the region to which the target key position point belongs may be acquired. If the navigation signal attribute indicates that a navigation signal of the region is valid, a regional navigation map of the region to which the target key position point belongs may be acquired, and then the regional navigation map may be determined as the movement guidance prompt information associated with the target key position point. If the navigation signal attribute indicates that the navigation signal of the region is missing, the recording video (the recording video is acquired by the AR device or other devices carried by the target object in the process of the target object moving from the parking position point to the destination position point and is configured for recording the target identification information and an ambient environment where the target identification information is located) associated with the target key position point may be acquired and determined as the movement guidance prompt information associated with the target key position point.

The navigation signal attribute of the region to which the target key position point belongs may be understood as an attribute of determining whether the target key position point has the GNSS signal. If the region where the target key position point is located has the GNSS signal, the navigation signal attribute may be an attribute indicating that the navigation signal is valid, and if the region where the target key position point is located does not have the GNSS signal, the navigation signal attribute may be an attribute indicating that the navigation signal is missing. In this disclosure, whether the movement guidance prompt information outputted to the target object is the recording video, the audio guidance prompt information, or the regional navigation map may be decided based on the navigation signal attribute of the region to which the target key position point belongs. The recording video, the audio guidance prompt information, and the regional navigation map may be simultaneously presented to the target object to better guide the target object.

In all embodiments of this disclosure, the AR device continuously records key position points in the process of the target object moving from the parking position point to the destination position point so that the target object may provide, when searching for the target item, intelligent guidance for returning to the parking position point of the target item through the foregoing series of key position points, thereby well assisting the target object to reach the parking position point of the target item. Even if there is no navigation satellite signal (for example, a GNSS signal) or another navigation coordinate signal in the round-trip process, the parking position point may be quickly and accurately reached through the intelligent guidance provided by the series of key position points without manually searching for a path to the parking position point, which may well improve the efficiency of searching for the target item.

Further, due to the diversity and complexity of traffic roads, the route from the parking position point to the destination position point may not only be the moving route of the target object. However, in this disclosure, moving paths of different objects moving from the parking position point to the destination position point may be acquired and recorded (other objects may further acquire environmental change information of moving from the parking position point to the destination position point by wearing the AR device so that the moving routes of different objects may be generated). Therefore, for the target object, in the process of the target object returning to the parking position point from the destination position point, the AR device may determine an optimal moving route (for example, a route with the shortest time consumption, a route passing through the fewest alleys, or a route passing through the most shady areas) based on the moving routes of different objects and the moving route of the target object reaching the destination position point from the parking position point. The AR device may output the optimal moving route to the target object. Therefore, the target object may move to the parking position point according to the guidance of the optimal moving route. There may be same position points in the foregoing moving routes of different objects. Therefore, for the target object, assuming that the target object initiates a navigation request for the target item only when reaching a position point on the way from the destination position point to the parking position point, the AR device may find, based on the foregoing moving routes of different objects, moving routes containing the target key position point, and then determine an optimal moving route based on these moving routes containing the target key position point and a moving route of the target object. The AR device may use guidance prompt information of the optimal moving route as the movement guidance prompt information of the target key position point.

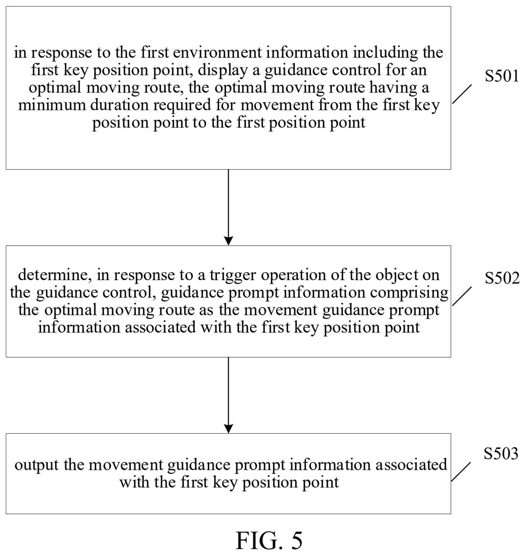

For ease of understanding, FIG. 5 is a schematic flowchart of outputting movement guidance prompt information of a target key position point according to embodiments of this disclosure. The process is a process described using an example in which the movement guidance prompt information of the target key position point is the guidance prompt information containing the optimal moving route. In addition, the process may correspond to the process of outputting the movement guidance prompt information of the target key position point in operation S102 in the foregoing embodiments corresponding to FIG. 3. As shown in FIG. 5, the process may include at least the following operation S501 to operation S503.

Operation S501: in response to the first environment information including the first key position point, display a guidance control for an optimal moving route, the optimal moving route having a minimum duration required for movement from the first key position point to the first position point.

Based on the foregoing description, when the first environmental change information acquired by the AR device contains the target key position point, the optimal moving route from the target key position point to the parking position point may be determined first, and then the guidance control for the optimal moving route is outputted. The target object may determine, based on the guidance control, whether to view the optimal moving route. If the target object generates a trigger operation on the guidance control, the target object has a viewing requirement for the optimal moving route. A manner of determining the optimal moving route and displaying the guidance control for the optimal moving route may be as follows. When the first environmental change information acquired by the AR device contains the target key position point, the global video associated with the target object may be acquired. The global video is acquired by the AR device or other devices carried by the target object and configured for recording a moving path of the target object in the process of the target object moving from the parking position point to the destination position point. A target moving route of the target object moving from the target key position point to the parking position point may be determined through the global video. Subsequently, the target moving route may be compared with historical moving routes in a historical moving route set to obtain the optimal moving route. One historical moving route in the historical moving route set refers to a moving route of a historical object stored by the AR device from the target key position point to the parking position point. The guidance control for the optimal moving route is displayed.

In this disclosure, reverse processing may be first performed on the global video to obtain a reverse-order video. Subsequently, key position points contained in the reverse-order video may be acquired in sequence to determine a moving route based on the key position points, and the moving route may be used as the target moving route of the target object. Before the target object, there may be another object moving from the parking position point to the destination position point (the another object may pass through the target key position point in the process of moving from the parking position point to the destination position point) or moving from the parking position point to the target key position point, or there may be some objects moving from the destination position point to the parking position point (these objects may pass through the target key position point in the process of moving from the destination position point to the parking position point) or moving from the target key position point to the parking position point. In this disclosure, these objects may be understood as historical objects whose moving time is earlier than that of the target object. Environmental change information of the historical objects in different moving processes may be acquired in the same manner (for example, the environmental change information is acquired using the AR device) so that moving routes of the historical object moving from the target key position point to the parking position point may be determined. The moving routes of the historical objects moving from the target key position point to the parking position point may be referred to as historical moving routes in this disclosure, and the historical moving routes of different historical objects may form a historical moving route set.

Further, the historical moving routes may be compared with the target moving route to determine an optimal moving route among the historical moving routes and the target moving routes. When the historical moving routes are compared with the target moving route herein, comparison may be performed according to a preset condition. For example, the consumed durations, the number of passed shady areas, the number of passed gas stations, and the number of passed shopping malls of the routes may be compared. Herein, comparing the consumed duration of the routes is used as an example, and a manner of comparing the target moving route with the historical moving routes in the historical moving route set to obtain the optimal moving route may be as follows. The historical moving routes in the historical moving route set and the target moving route may be determined as candidate moving routes to obtain a candidate moving route set. Subsequently, consumed durations required by the candidate moving routes in the candidate moving route set are determined to obtain a consumed duration set. Finally, a candidate moving route indicated by the minimum consumed duration in the consumed duration set may be determined as the optimal moving route. That is, among the candidate moving routes, a candidate moving route with the minimum consumed duration may be selected as the optimal moving route.

Operation S502: determine, in response to a trigger operation of the object on the guidance control, guidance prompt information comprising the optimal moving route as the movement guidance prompt information associated with the first key position point.

After the target object generates the trigger operation on the guidance control, in this disclosure, in response to the trigger operation of the target object, the guidance prompt information containing the optimal moving route is determined as the movement guidance prompt information associated with the target key position point.

Operation S503: output the movement guidance prompt information associated with the first key position point.

The guidance prompt information containing the optimal moving route may be outputted. Based on this, the target object may move according to a route indicated by the viewed optimal moving route to reach the parking position point in the shortest time.

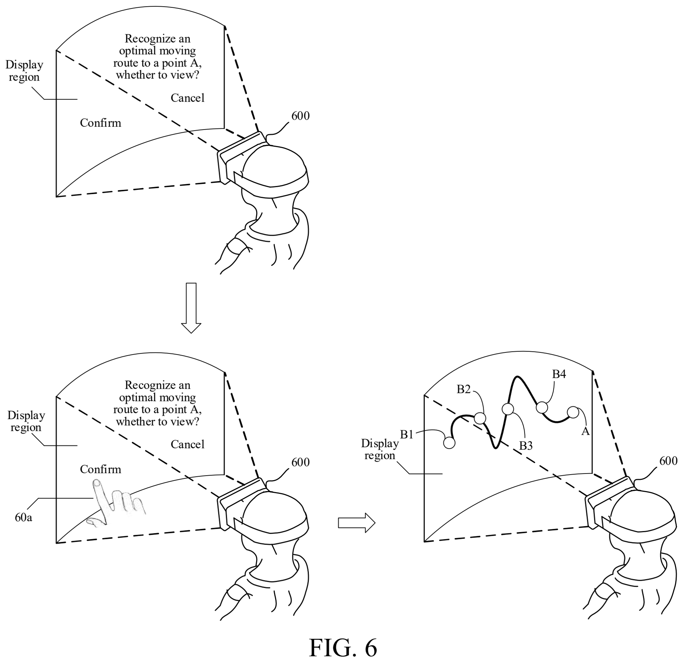

For ease of understanding, FIG. 6 is a schematic diagram of a scene for outputting movement guidance prompt information according to embodiments of this disclosure. The scene is a scene described using an example in which the movement guidance prompt information of the target key position point is the guidance prompt information containing the optimal moving route. As shown in FIG. 6, assuming that in a process of a target object (an object 60a shown in FIG. 6) returning to a parking position point A, when the target object reaches a position point B1, the AR device 600 recognizes that the position point B1 is a key position point. Then, the AR device 600 may acquire historical moving routes of historical objects moving from the key position point B1 to the parking position point A and may further determine, based on a global video of the target object 60a moving from the parking position point A to a destination position point, a target moving route of the target object 60a moving from the key position point B1 to the parking position point A. Subsequently, the AR device 600 may compare durations consumed by the historical moving routes and the target moving route (i.e., durations consumed by reaching the parking position point A, referred to as consumed durations) and determine a moving route with the minimum consumed duration as an optimal moving route.

Further, the AR device 600 may display, in a display region shown in FIG. 6, display prompt information "recognize an optimal moving route to a point A, whether to view" for the optimal moving route, and display a confirmation control and a cancel control simultaneously. The target object 60a may view the optimal moving route through a trigger operation on the confirmation control, or may refuse to view the optimal moving route through a trigger operation on the cancel control. The confirmation control may be understood as a guidance control for the optimal moving route. As shown in FIG. 6, after the target object 60a generates a trigger operation on the confirmation control, the AR device 600 may display the optimal moving route in the display region in response to the trigger operation. As shown in FIG. 6, the optimal moving route is a route from a key position point B1 to a parking position point A, and the route further contains a key position point B2, a key position point B3, and a key position point B4. Therefore, the target object 60a may first move from the key position point B1 currently located to the key position point B2, from the key position point B2 to the key position point B3, then from the key position point B3 to the key position point B4, and finally move from the key position point B4 to the parking position point A according to the guidance of the optimal moving route.

After the target object selects the optimal moving route as the moving route for reaching the parking position point, when the target object reaches any subsequent key position point, the optimal moving route of the subsequent key position point may no longer be determined, and the target object only needs to continuously move according to the optimal moving route of the target key position point. For example, in the embodiments corresponding to FIG. 6, when the target object 60a reaches the key position point B2 according to the optimal moving route, the AR device only needs to prompt that the target object 60a has reached the key position point B2, and may subsequently move to the key position point B3. The AR device does not need to determine the optimal moving route of the target object at the key position point B2 in the foregoing manner again.

In all embodiments of this disclosure, the AR device continuously records key position points in the process of the target object moving from the parking position point to the destination position point so that the target object may provide, when searching for the target item, intelligent guidance for returning to the parking position point of the target item through the foregoing series of key position points, thereby well assisting the target object to reach the parking position point of the target item. Even if there is no navigation satellite signal (for example, a GNSS signal) or another navigation coordinate signal in the round-trip process, the parking position point may be quickly and accurately reached through the intelligent guidance provided by the series of key position points without manually searching for a path to the parking position point, which may well improve the efficiency of searching for the target item. In addition, in a process of assisting the target object to reach the parking position point of the target item, this disclosure may further refer to a moving route of another object reaching the parking position point. Thus, the target object can return to the parking position point with very small consumed duration, thereby further improving the efficiency of searching for the target item.

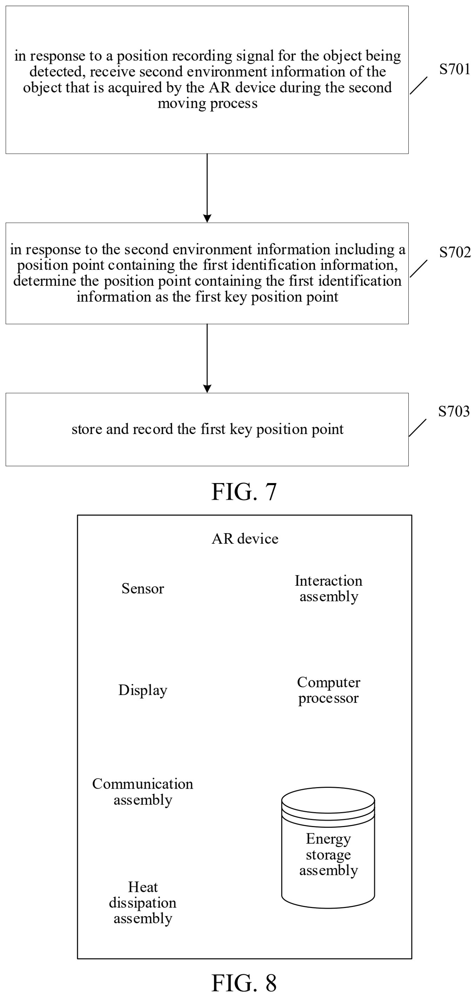

Further, FIG. 7 is a schematic flowchart of recognizing and recording a key position point according to embodiments of this disclosure. The process may correspond to the process before the acquiring, in response to a navigation request of a target object for a target item, first environmental change information of the target object in a first moving process via an AR device worn by the target object in the foregoing embodiments corresponding to FIG. 3, and may refer to a process of recognizing and recording a key position point reached by the target object in a second moving process of the target object. As shown in FIG. 7, the process may include at least the following operation S701 to operation S703.

Operation S701: in response to a position recording signal for the object being detected, receive second environment information of the object that is acquired by the AR device during the second moving process.

The position recording signal herein may refer to a position recording instruction issued by the target object. For example, the target object may transmit a request for recording a key position point, and the AR device may consider that the target object issues the position recording instruction, and the position recording instruction may be used as the position recording signal. In some particular scenes, the position recording signal may further refer to another particular signal. For example, in a scene in which the target item is a vehicle, the position recording signal may further be a signal recognizing that the vehicle (for example, a car) enters a parking lot. Once it is recognized that the target object drives the vehicle into the parking lot, the AR device may be started to acquire environmental change information. Whether the vehicle enters the parking lot may be recognized using a camera and a deep learning classification model (a deep learning model having a recognition function may be adopted for recognizing). Besides, the position recording signal may further be a signal detecting the flameout of the vehicle, a signal recognizing that the target object switches from a driving state to a walking state, or the like. That is, in the scene in which the target item is a vehicle, the position recording signal may be the signal indicating that the vehicle enters the parking lot, a signal indicating the flameout of the vehicle, the signal indicating that the target object switches from the driving state to the walking state, or the like.

Illustratively, taking the target item being a vehicle as an example, an implementation of detecting the position recording signal may be as follows. Driving data of the target object for the vehicle may be acquired, and state analysis (i.e., processing of analyzing a driving state of the target object for the vehicle according to the driving data of the target object) may be performed on the driving data of the target object to obtain the driving state of the target object. Subsequently, when a first state switching signal for switching the driving state from a driving ongoing state to a driving stop state is detected, the first state switching signal may be converted into the position recording signal for the target object.

The driving data herein may be inertial measurement unit (IMU) data or GNSS data. The IMU can measure a body angular velocity and a linear acceleration and is not affected by an external environment. The IMU of the target object is analyzed to determine whether the target object is in the driving state or the driving stop state (usually, the body angular velocity and the linear acceleration of the target object in the driving state are both large). The GNSS data may record a speed. Usually, a walking speed of the target object is far less than a speed in the driving state. Therefore, the GNSS data of the target object may be analyzed to determine whether the target object is in the driving state or the driving stop state. When it is detected that the driving state is switched from the driving ongoing state to the driving stop state, the position recording signal may be used. In other words, once it is detected that the driving state is switched from the driving ongoing state to the driving stop state, environmental change information may be acquired via the AR device.

Operation S702: in response to the second environment information including a position point containing the first identification information, determine the position point containing the first identification information as the first key position point.

When the target object reaches a position point, if it is recognized that the position point contains particular identification information (for example, the target identification information), the position point may be determined as a key position point (for example, the target key position point).

Operation S703: store and record the first key position point.

Key position points containing the target key position point may be stored and recorded. When the position stop recording signal is received, it may be determined that the target object reaches the destination position point. A position point where the target object is located at a current moment (the current moment may be understood as a moment at which the position stop recording signal is received) may be determined as the destination position point. Subsequently, an acquisition stop instruction may be generated to instruct, through the acquisition stop instruction, the AR device to stop acquiring the second environmental change information of the target object in the second moving process.

The position stop recording signal herein may alternatively refer to a position stop recording instruction issued by the target object. For example, after the target object reaches the destination position point, the target object may transmit a request for stopping recording the position point, and the AR device may consider that the target object issues the position stop recording instruction, and the position stop recording instruction may be used as the position stop recording signal. The position stop recording signal may further refer to detecting another signal. For example, after the AR device detects that the target object reaches a position point, the target object does not move and is in a static state for a long period of time. Then, the AR device may consider that the target object reaches the destination position point, and a signal that the target object is in the static state for a long period of time may be used as a position stop recording signal. For another example, after the target object reaches a position point, the AR device recognizes that a large region where the position point is located has a GNSS signal. Then, the target object may navigate the position point based on the GNSS signal without wasting resources to acquire the environmental change information. Therefore, the AR device may consider that the target object reaches the destination position point, and may stop acquiring the environmental change information and stop recording subsequent key position points. For another example, after the target object reaches a position point, the AR device detects that the position point is associated with a point of interest (the point of interest may refer to an identifiable position point contained in the online map, for example, a bus station, a store, or a mailbox location) in an online map, and the target object may navigate through the online map of the associated point of interest without wasting resources to acquire the environmental change information. Therefore, the AR device may consider that the target object reaches the destination position point, and may stop acquiring the environmental change information and stop recording subsequent key position points. For another example, after the target object reaches a position point, the AR device detects that the position point can be positioned through an image, a Bluetooth beacon, a navigation map, or the like. The position point has a navigation attribute, and the target object may directly perform positioning and navigation. Therefore, the AR device may consider that the target object reaches the destination position point, and may stop acquiring the environmental change information and stop recording subsequent key position points.

That is, a manner of detecting the position stop recording signal may be as follows. Moving data of the target object in the second moving process may be acquired, and then state analysis may be performed on the moving data of the target object to obtain a moving state of the target object. Subsequently, when a second state switching signal for switching the moving state from a continuous moving state to a continuous static state is detected, the second state switching signal is converted into the position stop recording signal for the target object.

The moving data of the target object may refer to walking data. Through state analysis on the moving data of the target object, whether the target object stays static for a long time may be determined. When the target object stays static for a long time, it may be determined that the target object is in the continuous static state. Once it is detected that the target object is in the continuous static state, the acquisition of the second environmental change information may be stopped.

Based on the foregoing description, a manner of detecting the position stop recording signal may further be as follows. The navigation signal attribute of the region to which the target key position point belongs may be detected. If an attribute switching signal for switching the navigation signal attribute from the navigation signal missing attribute to the navigation signal validity attribute is detected, the attribute switching signal may be converted into the position stop recording signal for the target object.

The navigation signal attribute herein may refer to an attribute of determining whether the target key position point can perform positioning and navigation. When the target key position point has a GNSS signal, has an associated point of interest, or may perform position point positioning, the target key position point has a navigation signal, i.e., the navigation signal attribute is the navigation signal validity attribute. If the target key position point does not have a GNSS signal, has no associated point of interest, and cannot perform position point positioning, the target key position point does not have a navigation signal, and the navigation signal attribute is the navigation signal missing attribute. In the second moving process of the target object, once it is detected that the position point where the target object is located switches from the navigation signal missing attribute to the navigation signal validity attribute, the target object reaches a region where navigation and positioning may be performed. Subsequently, there is no need to acquire environmental change information to record key position points.

In all embodiments of this disclosure, the AR device continuously records key position points in the process of the target object moving from the parking position point to the destination position point so that the target object may provide, when searching for the target item, intelligent guidance for returning to the parking position point of the target item through the foregoing series of key position points, thereby well assisting the target object to reach the parking position point of the target item. Even if there is no navigation satellite signal (for example, a GNSS signal) or another navigation coordinate signal in the round-trip process, the parking position point may be quickly and accurately reached through the intelligent guidance provided by the series of key position points without manually searching for a path to the parking position point, which may well improve the efficiency of searching for the target item. In this process, in this disclosure, whether the target object starts to the destination position point and whether the target object reaches the destination position point may be determined in multiple manners so that the acquisition of environmental information may be properly started or stopped to save device resources.

Further, FIG. 8 is a schematic diagram of an architecture of an AR device according to embodiments of this disclosure. As shown in FIG. 8, the AR device may include at least: a sensor, a display, a communication assembly, a heat dissipation assembly, an interaction assembly, a computer processor, and an energy storage assembly. The components of the architecture will be described below.

Sensor: the sensor may include at least a camera, an IMU, a GNSS, a microphone, a barometric pressure sensor, an infrared (IR) camera, a lidar sensor, an ultra wide band (UWB) technology, and the like. The environmental change information of the target object may be acquired through the sensor.

Display: the display at least has a function of playing media data such as a video, an image, and a text, and may be configured to display related content.

Communication assembly: the communication assembly may at least include, but is not limited to, WIFI, a cellular network, a Bluetooth, near field communication (NFC), an IR sensor, and the like.

Interaction assembly: the interaction assembly may include at least a button, a speaker, a vibration motor, and the like, and may be configured to interact with the target object.

Computer processor: the computer processor may be configured to process the environmental change information to obtain a series of key position points to generate a key path.

Energy storage assembly: the energy storage assembly may be configured to store energy.

Heat dissipation assembly: the heat dissipation assembly may be configured to dissipate heat.

The environmental change information and a series of key position points acquired by the AR device may be uploaded to a business server or a terminal device. In this case, when the energy (for example, electric quantity) of the AR device is excessively low, or the display has a limited display capability or is faulty, a corresponding service may be provided through data stored in the business server or the terminal device.

Functions provided by the components in the AR device in the embodiments of this disclosure may refer to the descriptions in the foregoing embodiments, and details are not described herein again.

In all embodiments of this disclosure, the AR device continuously records key position points in the process of the target object moving from the parking position point to the destination position point so that the target object may provide, when searching for the target item, intelligent guidance for returning to the parking position point of the target item through the foregoing series of key position points, thereby well assisting the target object to reach the parking position point of the target item. Even if there is no navigation satellite signal (for example, a GNSS signal) or another navigation coordinate signal in the round-trip process, the parking position point may be quickly and accurately reached through the intelligent guidance provided by the series of key position points without manually searching for a path to the parking position point, which may well improve the efficiency of searching for the target item.

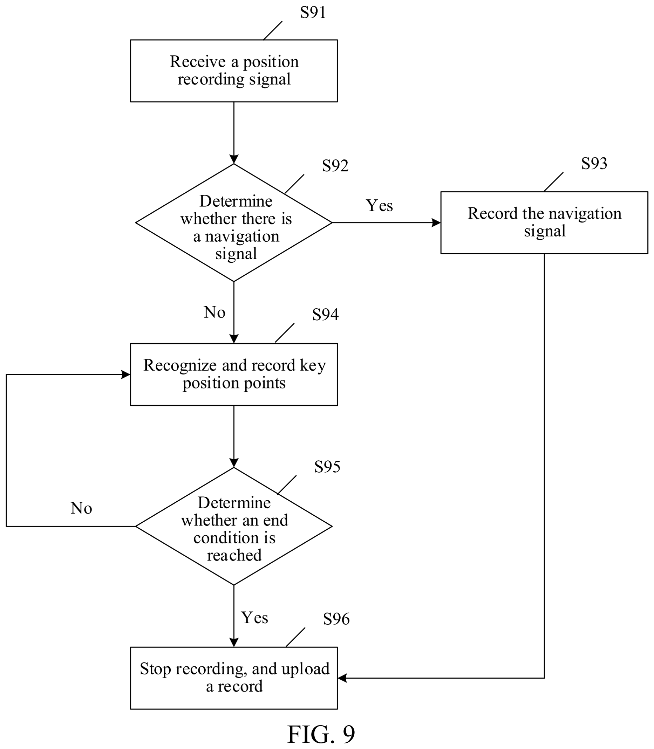

Further, to facilitate understanding of the overall process, FIG. 9 is a system logic flowchart according to embodiments of this disclosure. As shown in FIG. 9, the system process may include at least the following operation S91 to operation S96.

Operation S91: Receive a position recording signal.

When the position recording signal is received, environmental change information of a target object may be acquired, and a key position point is recognized and recorded.

Operation S92: Determine whether there is a navigation signal.

For each position point where the target object is located (for example, a position point where the target object is located when the position recording signal is received), whether the position point has a navigation signal (for example, whether the position point has a GNSS signal) may be recognized and detected. If the position point has the navigation signal, subsequent operation S93 may be performed. If the position point does not have the navigation signal, subsequent operation S94 may be performed.

Operation S93: Record the navigation signal.

A position point having the navigation signal may be recorded together with the navigation signal.

Operation S94: Recognize and record key position points.

When the position point where the target object is located does not have the navigation signal, the key position points may continue to be recognized and recorded.

Operation S95: Determine whether an end condition is reached.

In a moving process of the target object, the key position points may be continuously recognized and recorded until a position stop recording signal is received. The end condition herein is whether the position stop recording signal is received. If the position stop recording signal is received, the end condition is satisfied, and subsequent operation S96 may be performed. However, if the position stop recording signal is not received, the end condition is not satisfied, and operation S94 may continue to be performed, that is, the key position points continue to be recognized and recorded.

Operation S96: Stop recording, and upload a record.

The recorded key position points may be uploaded to the terminal device or the business server.

Implementations of operation S91 to operation S96 may refer to the descriptions in the foregoing embodiments, and details are not described herein again. The beneficial effects will not be described again here.

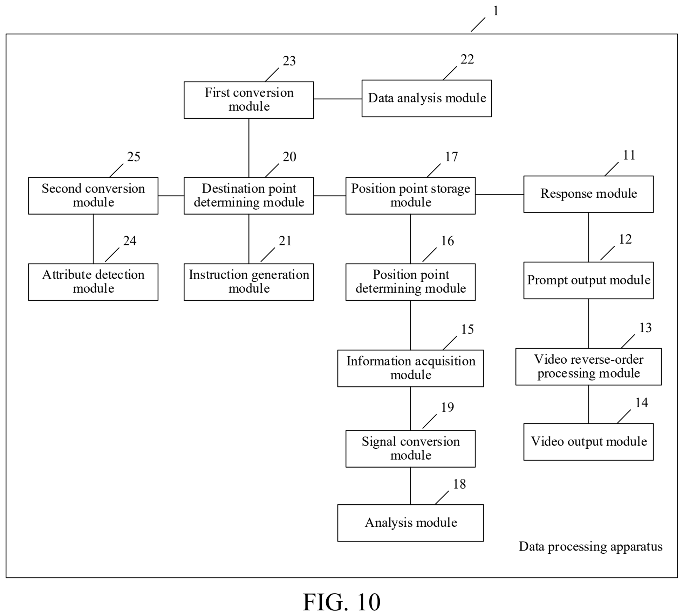

Further, FIG. 10 is a schematic structural diagram of a data processing apparatus according to embodiments of this disclosure. The data processing apparatus may be a computer program (including program code) run on a computer device. For example, the data processing apparatus is application software. The data processing apparatus may be configured to perform the method shown in FIG. 3. As shown in FIG. 10, the data processing apparatus 1 may include: a response module 11 and a prompt output module 12.

The response module 11 is configured to receive, in response to a navigation request of an object for a first position point, first environment information of the object that is acquired by an augmented reality, AR, device worn by the object during a first moving process performed by the object moving from a current position point to a first position point.

The prompt output module 12 is configured to, in response to the first environment information including a first key position point, output movement guidance prompt information associated with the first key position point and configured to guide the object to move from the current position point to the first position point, the first key position point being acquired during a second moving process performed by the object moving from the first position point to a second position point and containing first identification information, and the current position point comprises any position point at which the object is located in a process of the object moving from the second position point to the first position point.

Implementations of the response module 11 and the prompt output module 12 may refer to the descriptions of operation S101 to operation S102 in the foregoing embodiments corresponding to FIG. 3, and details are not described herein again.

In all embodiments, the movement guidance prompt information comprises a first recording video associated with the first key position point, and the first recording video is acquired by the AR device during the second moving process and is used for recording the first identification information and an ambient environment containing the first identification information.

An implementation in which the prompt output module 12 outputs the movement guidance prompt information associated with the first key position point includes:
in response to the first environment information including the first key position point, displaying a first playback control for the first recording video; and
outputting and playing the first recording video in response to a trigger operation of the object on the first playback control.

In all embodiments, the movement guidance prompt information comprises audio guidance prompt information generated based on the first key position point and a second key position point, the second key position point is a position point including second identification information, and in the second moving process, the object reaches the first key position point after reaching the second key position point.

An implementation in which the prompt output module 12 outputs the movement guidance prompt information associated with the first key position point point includes:
in response to the first environment information includes the first key position point, outputting and/or playing the audio guidance prompt information, wherein the audio guidance prompt information is used for instructing the object to move from the first key position point to the second key position point.

In all embodiments, the movement guidance prompt information includes a second playback control for a second recording video associated with the object, the second recording video is acquired by the AR device during the second moving process and is used for recording a moving path of the object, and the moving path includes the first key position point.

In all embodiments, after the prompt output module 12 outputs the movement guidance prompt information, the data processing apparatus 1 further includes: a video reverse processing module 13 and a video output module 14.

The video reverse processing module 13 is configured to, in response to a trigger operation by the object on the second playback control, reverse the second recording video to create a reverse-order video corresponding to the second recording video.

The video output module 14 is configured to output and play the reverse-order video, wherein the reverse-order video is used for indicating a whole route of the object moving from the first key position point to the first position point.

Implementations of the video reverse processing module 13 and the video output module 14 may refer to the descriptions of operation S102 in the foregoing embodiments corresponding to FIG. 3, and details are not described herein again.

In all embodiments, a manner in which the prompt output module 12 outputs the movement guidance prompt information associated with the first key position point includes:
in response to the first environment information including the first key position point, displaying a guidance control for an optimal moving route, the optimal moving route having a minimum duration required for movement from the first key position point to the first position point;
determining, in response to a trigger operation of the object on the guidance control, guidance prompt information comprising the optimal moving route as the movement guidance prompt information associated with the first key position point; and
outputting the movement guidance prompt information associated with the first key position point.

In all embodiments, a manner in which the prompt output module 12 displays the guidance control for the optimal moving route includes:
in response to the first environment information including the first key position point, acquiring the second recording video associated with the object, the second recording video is acquired by the AR device during the second moving process and used for recording the moving path of the object;
determining, from the second recording video, a moving route of the object moving from the first key position point to the first position point;
comparing the moving route of the object with historical moving routes in a historical moving route set stored by the AR device to obtain the optimal moving route, wherein the historical moving routes comprise moving routes of historical objects moving from the first key position point to the first position point; and
displaying the guidance control for the optimal moving route.

In all embodiments, a manner in which the prompt output module 12 compares the moving route of the object with the historical moving routes in the historical moving route set to obtain the optimal moving route includes:
determining the historical moving routes and the moving route of the object as candidate moving routes, and using the candidate moving routes to generate a candidate moving route set;
determining a duration required for each of the candidate moving routes to move from the first key position point to the first position point to obtain a duration set; and
determining a candidate moving route with a minimum duration in the duration set as the optimal moving route.

In all embodiments, a manner in which the prompt output module 12 outputs the movement guidance prompt information associated with the first key position point includes:
in response to the first environment information including the first key position point, determining the movement guidance prompt information associated with the first key position point according to a navigation signal attribute of a region to which the first key position point belongs; and
outputting the movement guidance prompt information associated with the first key position point.

In all embodiments, a manner in which the prompt output module 12 determines the movement guidance prompt information associated with the first key position point according to the navigation signal attribute of the region to which the first key position point belongs includes:
acquiring the navigation signal attribute of the region to which the first key position point belongs;
in response to the navigation signal attribute indicating that a navigation signal of the region is valid, acquiring a regional navigation map of the region, and determining the regional navigation map as the movement guidance prompt information associated with the first key position point; and
in response to the navigation signal attribute indicating that the navigation signal of the region is missing, acquiring the first recording video associated with the first key position point, and determining the first recording video as the movement guidance prompt information associated with the first key position point, wherein the first recording video is acquired by the AR device during the second moving process and is used for recording the first identification information and the ambient environment containing the first identification information.

In all embodiments, before the response module 11 receives the first environment information of the object, the data processing apparatus 1 further includes: an information acquisition module 15, a position point determining module 16, and a position point storage module 17.

The information acquisition module 15 is configured to, in response to a position recording signal for the object being detected, receive second environment information of the object that is acquired by the AR device during the second moving process.

The position point determining module 16 is configured to, in response to the second environment information including a position point containing the first identification information, determine the position point containing the first identification information as the first key position point.

The position point storage module 17 is configured to store and record the first key position point.

Implementations of the information acquisition module 15, the position point determining module 16, and the position point storage module 17 may refer to the descriptions of operation S701 to operation S703 in the foregoing embodiments corresponding to FIG. 7, and details are not described herein again.

In all embodiments, the first position point is used for parking a transportation item.

Before the information acquisition module 15 receives the second environment information of the object, the data processing apparatus 1 further includes: an analysis module 18 and a signal conversion module 19.

The analysis module 18 is configured to acquire driving data of the object for the transportation item, and performing state analysis on the driving data to obtain a driving state of the object.

The signal conversion module 19 is configured to, in response to a first state switching signal for switching the driving state from a driving ongoing state to a driving stop state being detected, use the first state switching signal as the position recording signal for the object.

Implementations of the analysis module 18 and the signal conversion module 19 may refer to the descriptions of operation S701 in the foregoing embodiments corresponding to FIG. 7, and details are not described herein again.

In all embodiments, after the position point storage module 17 stores and records tthe first key position point, the data processing apparatus 1 further includes: a destination point determining module 20 and an instruction generation module 21.

The destination point determining module 20 is configured to, in response to a position stop recording signal being received, determine a position point at which the object is currently located as the second position point.

The instruction generation module 21 is configured to generate an acquisition stop instruction, wherein the acquisition stop instruction is used for instructing the AR device to stop acquiring the second environment information.

Implementations of the destination point determining module 20 and the instruction generation module 21 may refer to the descriptions of operation S703 in the foregoing embodiments corresponding to FIG. 7, and details are not described herein again.

In all embodiments, before the destination point determining module 20 determines the position point at which the object is currently located as the second position point, the data processing apparatus 1 further includes: a data analysis module 22 and a first conversion module 23.

The data analysis module 22 is configured to acquire moving data of the object in the second moving process, and perform state analysis on the moving data of the object to obtain a moving state of the object.

The first conversion module 23 is configured to, in response to a second state switching signal for switching the moving state from a continuous moving state to a continuous static state being detected, use the second state switching signal as the position stop recording signal for the object.

Implementations of the data analysis module 22 and the first conversion module 23 may refer to the descriptions of operation S703 in the foregoing embodiments corresponding to FIG. 7, and details are not described herein again.

In all embodiments, before the destination point determining module 20 determines the position point at which the object is currently located as the second position point, the data processing apparatus 1 further includes: an attribute detection module 24 and a second conversion module 25.

The attribute detection module 24 is configured to detect the navigation signal attribute of the region to which the first key position point belongs.

The second conversion module 25 is configured to, in response to an attribute switching signal for switching the navigation signal attribute from a missing navigation signal to a valid navigation signal being detected, using the attribute switching signal as the position stop recording signal for the object.

Implementations of the attribute detection module 24 and the second conversion module 25 may refer to the descriptions of operation S703 in the foregoing embodiments corresponding to FIG. 7, and details are not described herein again.

In all embodiments of this disclosure, the AR device continuously records key position points in the process of the target object moving from the parking position point to the destination position point so that the target object may provide, when searching for the target item, intelligent guidance for returning to the parking position point of the target item through the foregoing series of key position points, thereby well assisting the target object to reach the parking position point of the target item. Even if there is no navigation satellite signal (for example, a GNSS signal) or another navigation coordinate signal in the round-trip process, the parking position point may be quickly and accurately reached through the intelligent guidance provided by the series of key position points without manually searching for a path to the parking position point, which may well improve the efficiency of searching for the target item.

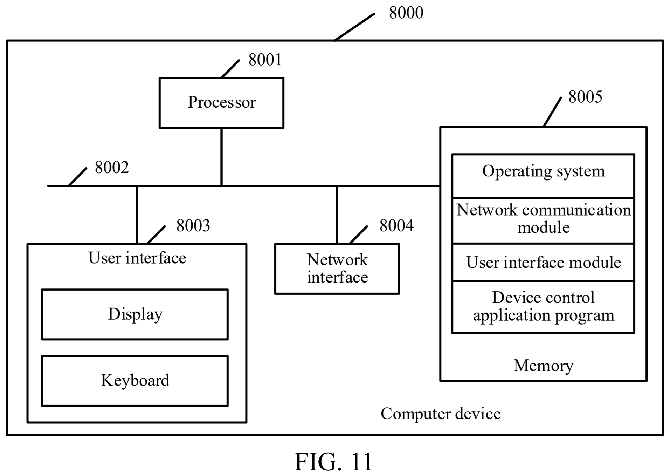

Further, FIG. 11 is a schematic structural diagram of a computer device according to embodiments of this disclosure. As shown in FIG. 11, a computer device 8000 may include: a processor 8001, a network interface 8004, and a memory 8005. In addition, the foregoing computer device 8000 further includes: a user interface 8003 and at least one communication bus 8002. The communication bus 8002 is configured to implement the connection and communication among the assemblies. The user interface 8003 may include a display and a keyboard. In some embodiments, the user interface 8003 may further include a standard wired interface and a standard wireless interface. In some embodiments, the network interface 8004 may include a standard wired interface and a standard wireless interface (such as a WI-FI interface). The memory 8005 may be a high-speed random access memory (RAM), or may be a non-volatile memory, for example, at least one magnetic disk storage. In some embodiments, the memory 8005 may alternatively be at least one storage apparatus away from the foregoing processor 8001. As shown in FIG. 11, as a computer-readable storage medium, the memory 8005 may include an operating system, a network communication module, a user interface module, and a device control application program.

In the computer device 8000 shown in FIG. 11, the network interface 8004 may provide a network communication function. The user interface 8003 is mainly configured to provide an input interface for a user. The processor 8001 may be configured to invoke the device control application program stored in the memory 8005 to implement:
acquiring, in response to a navigation request of a target object for a target item, first environmental change information of the target object in a first moving process via an AR device worn by the target object, the first moving process referring to a process of moving from a starting position point to a parking position point of the target item; and
outputting, when the first environmental change information acquired by the AR device contains a target key position point, movement guidance prompt information associated with the target key position point, the movement guidance prompt information being configured for guiding the target object to reach the parking position point; the target key position point referring to a position point that is acquired by the AR device and contains target identification information in a process of moving from the parking position point to a destination position point; and the starting position point referring to any position point where the target object is located in a process of the target object moving from the destination position point to the parking position point.

The computer device 8000 described in all embodiments of this disclosure may perform the descriptions of the data processing method in the foregoing embodiments corresponding to FIG. 3 and FIG. 9, and may further perform the descriptions of the data processing apparatus 1 in the foregoing embodiments corresponding to FIG. 10. Details are not described herein again. In addition, the description of beneficial effects of the same method are not described herein again.

In addition, the embodiments of this disclosure further provide a computer-readable storage medium. The computer-readable storage medium has a computer program executed by the computer device 8000 for data processing mentioned above stored therein, and the computer program includes a program instruction. When executing the program instruction, the processor can perform the descriptions of the data processing method in the embodiments corresponding to FIG. 3 and FIG. 9. Therefore, details are not described herein again. In addition, the description of beneficial effects of the same method are not described herein again. Technical details that are not disclosed in the computer-readable storage medium embodiments of this disclosure may refer to the descriptions of the method embodiments of this disclosure.

The foregoing computer-readable storage medium may be an internal storage unit of the data processing apparatus provided in any of the foregoing embodiments or an internal storage unit of the foregoing computer device, for example, a hard disk or memory of the computer device. The computer-readable storage medium may alternatively be an external storage device of the computer device, for example, a plug-in hard disk, a smart media card (SMC), a secure digital (SD) card, and a flash card that are equipped in the computer device. Further, the computer-readable storage medium may further include both the internal storage unit and the external storage device of the computer device. The computer-readable storage medium is configured to store the computer program, and other programs and data required by the computer device. The computer-readable storage medium may further be configured to temporarily store data that has been outputted or is to be outputted.

According to an aspect of this disclosure, a computer program product is provided, including a computer program. The computer program is stored in a computer-readable storage medium (such as non-transitory computer-readable storage medium). A processor of a computer device reads the computer program from the computer-readable storage medium and executes the computer program to cause the computer device to perform the method provided in one aspect of the embodiments of this disclosure.

In the specification, claims, and accompanying drawings of the embodiments of this disclosure, the terms "first", "second", and so on are intended to distinguish different objects but do not indicate a particular order. In addition, the term "include" and any variant thereof are intended to cover a non-exclusive inclusion. For example, processes, methods, apparatuses, products, or devices containing a series of steps or units are not limited to the listed steps or units, but alternatively include steps or units that are not listed, or alternatively include other steps or units that are inherent to these processes, methods, apparatuses, products, or devices.

A person skilled in the art may realize that the units and algorithm steps in the example described in conjunction with the embodiments disclosed herein may be implemented in electronic hardware, computer software, or a combination of the two. To clearly illustrate the interchangeability of hardware and software, the composite and steps of the examples have been described above generally according to functions. Whether these functions are implemented in hardware or software depends on the specific application and design constraints of the technical solutions. For each particular application, a person skilled in the art may use different methods to achieve the described function, but this implementation shall not be considered outside the scope of this disclosure.

The methods and related apparatuses provided in the embodiments of this disclosure are described with reference to the method flowcharts and/or schematic structural diagrams provided in the embodiments of this disclosure. Each process and/or block in the method flowcharts and/or schematic structural diagrams and a combination of processes and/or blocks in the flowcharts and/or block diagrams may be implemented by computer program instructions. These computer program instructions may be provided to a general-purpose computer, a dedicated computer, an embedded processor, or a processor of another programmable data processing device to generate a machine so that the instructions executed by the computer or the processor of the another programmable data processing device generate an apparatus configured to implement the functions specified in one or more processes in the flowcharts and/or one or more blocks in the schematic structural diagrams. These computer program instructions may alternatively be stored in a computer-readable memory that can guide a computer or another programmable data processing device to operate in a manner so that the instructions stored in the computer-readable memory generate an artifact including an instruction apparatus. The instruction apparatus implements the functions specified in one or more processes in the flowcharts and/or one or more blocks in the schematic structural diagrams. These computer program instructions may alternatively be loaded onto a computer or another programmable data processing device so that a series of operations and steps are performed on the computer or the another programmable device, thereby generating computer-implemented processing. Therefore, the instructions executed on the computer or the another programmable device provide operations for implementing the functions specified in one or more processes in the flowcharts and/or one or more blocks in the schematic structural diagrams.

What is disclosed above is merely exemplary embodiments of this disclosure, and is not intended to limit the scope of the claims of this disclosure. Therefore, equivalent variations made in accordance with the claims of this disclosure shall fall within the scope of this disclosure.

## Claims

1. A data processing method, executable by a computer device, and comprising:
receiving, in response to a navigation request of an object for a first position point, first environment information of the object that is acquired by an augmented reality, AR, device worn by the object during a first moving process performed by the object moving from a current position point to a first position point; and
in response to the first environment information including a first key position point, outputting movement guidance prompt information associated with the first key position point and configured to guide the object to move from the current position point to the first position point, the first key position point being acquired during a second moving process performed by the object moving from the first position point to a second position point and containing first identification information, and the current position point comprises any position point at which the object is located in a process of the object moving from the second position point to the first position point.

2. The method according to claim 1, wherein the movement guidance prompt information comprises a first recording video associated with the first key position point, and the first recording video is acquired by the AR device during the second moving process and is used for recording the first identification information and an ambient environment containing the first identification information; and
the outputting the movement guidance prompt information associated with the first key position point comprises:
in response to the first environment information including the first key position point, displaying a first playback control for the first recording video; and
outputting and playing the first recording video in response to a trigger operation of the object on the first playback control.

3. The method according to any one of claims 1 to 2, wherein the movement guidance prompt information comprises audio guidance prompt information generated based on the first key position point and a second key position point, the second key position point is a position point including second identification information, and in the second moving process, the object reaches the first key position point after reaching the second key position point; and
the outputting the movement guidance prompt information associated with the first key position point comprises:
in response to the first environment information includes the first key position point, outputting and playing the audio guidance prompt information, wherein the audio guidance prompt information is used for instructing the object to move from the first key position point to the second key position point.

4. The method according to any one of claims 1 to 3, wherein the movement guidance prompt information includes a second playback control for a second recording video associated with the object, the second recording video is acquired by the AR device during the second moving process and is used for recording a moving path of the object, and the moving path includes the first key position point; and
after outputting the movement guidance prompt information, the method further comprises:
in response to a trigger operation by the object on the second playback control, reversing the second recording video to create a reverse-order video corresponding to the second recording video; and
outputting and playing the reverse-order video, wherein the reverse-order video is used for indicating a whole route of the object moving from the first key position point to the first position point.

5. The method according to any one of claims 1 to 4, wherein the outputting the movement guidance prompt information associated with the first key position point comprises:
in response to the first environment information including the first key position point, displaying a guidance control for an optimal moving route, the optimal moving route having a minimum duration required for movement from the first key position point to the first position point;
determining, in response to a trigger operation of the object on the guidance control, guidance prompt information comprising the optimal moving route as the movement guidance prompt information associated with the first key position point; and
outputting the movement guidance prompt information associated with the first key position point.

6. The method according to claim 5, wherein the displaying the guidance control for the optimal moving route comprises:
in response to the first environment information including the first key position point, acquiring the second recording video associated with the object, the second recording video is acquired by the AR device during the second moving process and used for recording the moving path of the object;
determining, from the second recording video, a moving route of the object moving from the first key position point to the first position point;
comparing the moving route of the object with historical moving routes in a historical moving route set stored by the AR device to obtain the optimal moving route, wherein the historical moving routes comprise moving routes of historical objects moving from the first key position point to the first position point; and
displaying the guidance control for the optimal moving route.

7. The method according to claim 6, wherein the comparing the moving route of the object with the historical moving routes in the historical moving route set to obtain the optimal moving route comprises:
determining the historical moving routes and the moving route of the object as candidate moving routes, and using the candidate moving routes to generate a candidate moving route set;
determining a duration required for each of the candidate moving routes to move from the first key position point to the first position point to obtain a duration set; and
determining a candidate moving route with a minimum duration in the duration set as the optimal moving route.

8. The method according to any one of claims 1 to 7, wherein the outputting the movement guidance prompt information associated with the first key position point comprises:
in response to the first environment information including the first key position point, determining the movement guidance prompt information associated with the first key position point according to a navigation signal attribute of a region to which the first key position point belongs; and
outputting the movement guidance prompt information associated with the first key position point.

9. The method according to claim 8, wherein the determining the movement guidance prompt information associated with the first key position point according to the navigation signal attribute of the region to which the first key position point belongs comprises:
acquiring the navigation signal attribute of the region to which the first key position point belongs;
in response to the navigation signal attribute indicating that a navigation signal of the region is valid, acquiring a regional navigation map of the region, and determining the regional navigation map as the movement guidance prompt information associated with the first key position point; and
in response to the navigation signal attribute indicating that the navigation signal of the region is missing, acquiring the first recording video associated with the first key position point, and determining the first recording video as the movement guidance prompt information associated with the first key position point, wherein the first recording video is acquired by the AR device during the second moving process and is used for recording the first identification information and the ambient environment containing the first identification information.

10. The method according to any one of claims 1 to 9, wherein before receiving the first environment information of the object, the method further comprises:
in response to a position recording signal for the object being detected, receiving second environment information of the object that is acquired by the AR device during the second moving process;
in response to the second environment information including a position point containing the first identification information, determining the position point containing the first identification information as the first key position point; and
storing and recording the first key position point.

11. The method according to claim 10, wherein the first position point is used for parking a transportation item, and before receiving the second environment information of the object, the method further comprises:
acquiring driving data of the object for the transportation item, and performing state analysis on the driving data to obtain a driving state of the object; and
in response to a first state switching signal for switching the driving state from a driving ongoing state to a driving stop state being detected, using the first state switching signal as the position recording signal for the object.

12. The method according to any one of claims 10 to 11, wherein after storing and recording the first key position point, the method further comprises:
in response to a position stop recording signal being received, determining a position point at which the object is currently located as the second position point; and
generating an acquisition stop instruction, wherein the acquisition stop instruction is used for instructing the AR device to stop acquiring the second environment information.

13. The method according to claim 12, wherein before determining the position point at which the object is currently located as the second position point, the method further comprises:
acquiring moving data of the object in the second moving process, and performing state analysis on the moving data of the object to obtain a moving state of the object; and
in response to a second state switching signal for switching the moving state from a continuous moving state to a continuous static state being detected, using the second state switching signal as the position stop recording signal for the object.

14. The method according to any one of claims 12 to 13, wherein before determining the position point at which the object is currently located as the second position point, the method further comprises:
detecting the navigation signal attribute of the region to which the first key position point belongs; and
in response to an attribute switching signal for switching the navigation signal attribute from a missing navigation signal to a valid navigation signal being detected, using the attribute switching signal as the position stop recording signal for the object.

15. A data processing apparatus, applied to a computer device, and comprising:
a response module configured to receive, in response to a navigation request of an object for a first position point, first environment information of the object that is acquired by an augmented reality, AR, device worn by the object during a first moving process performed by the object moving from a current position point to a first position point; and
a prompt output module configured to, in response to the first environment information including a first key position point, output movement guidance prompt information associated with the first key position point and configured to guide the object to move from the current position point to the first position point, the first key position point being acquired during a second moving process performed by the object moving from the first position point to a second position point and containing first identification information, and the current position point comprises any position point at which the object is located in a process of the object moving from the second position point to the first position point.

16. A computer device, comprising: a processor, a memory, and a network interface,
the processor being connected to the memory and the network interface, the network interface being configured to provide a data communication function, the memory being configured to store a computer program, and the processor being configured to invoke the computer program to cause the computer device to perform the method according to any one of claims 1 to 14.

17. A computer-readable storage medium, having a computer program stored therein, and the computer program being adapted to be loaded by a processor and to perform the method according to any one of claims 1 to 14.

18. A computer program product, comprising a computer program, the computer program being stored in a computer-readable storage medium and adapted to be read and executed by a processor to cause a computer device having the processor to perform the method according to any one of claims 1 to 14.
